# EUROPEAN PATENT APPLICATION

(11) **EP 4 379 501 A1**
(43) Date of publication of application: **05.06.2024**
(21) Application number: 23801652.1
(22) Date of filing: 19.10.2023
(51) Int. Cl.: G06F 1/16, C09J 7/00

(54) **FOLDABLE ELECTRONIC DEVICE**

(30) Priority: 19.10.2022 KR 20220134756; 24.11.2022 KR 20220159762
(71) Applicant: Samsung Electronics Co., Ltd., Suwon-si, Gyeonggi-do 16677 (KR)
(72) Inventor: AN, Jungchul, Suwon-si, Gyeonggi-do 16677 (KR); KIM, Sangkyu, Suwon-si, Gyeonggi-do 16677 (KR); YOON, Shinhyuk, Suwon-si, Gyeonggi-do 16677 (KR); JUNG, Kiyoung, Suwon-si, Gyeonggi-do 16677 (KR)
(74) Representative: Gulde & Partner
(86) International application number: PCT/KR2023/016241
(87) International publication number: WO 2024/085678

(57) **Abstract**

According to an exemplary embodiment of the disclosure, a foldable electronic device is provided, and the foldable electronic device may include a foldable housing, a display module, a display drive circuit, a conductive sheet, an adhesive part, a magnetic element, and a film. The display module may be disposed in the foldable housing. The display module may include a flexible display including a plurality of pixels. The display module may include an extension part extending from the flexible display. The extension part may include a first portion positioned between the flexible display and the foldable housing. The extension part may include a second portion extending while being bent toward the first portion from the flexible display. The display drive circuit may be disposed on the first portion. The conductive sheet may be disposed between the first portion and the foldable housing and coupled to the first portion. The adhesive part may be disposed between the conductive sheet and the foldable housing. The magnetic element may be disposed between the first portion and the foldable housing. The magnetic element may be positioned between the adhesive part and the second portion when viewed from above the first portion. The film may be disposed between the conductive sheet and the foldable housing and disposed on the conductive sheet while corresponding to the magnetic element. The magnetic element may be positioned between the film and the foldable housing.

## Description

### [Technical Field]

Embodiments of the disclosure relate to a foldable electronic device.

### [Background Art]

A foldable electronic device may include a flexible display module.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

There is a risk that a flexible display module is damaged by foreign substances introduced from the outside during a process of assembling constituent elements of the foldable electronic device.

Various embodiments of the disclosure may provide a foldable electronic device capable of reducing or preventing damage to a flexible display module.

Technical problems to be solved by the disclosure are not limited to the above-mentioned technical problems, and other technical problems, which are not mentioned above, may be understood from the following descriptions by those skilled in the art to which the disclosure pertains.

### [Solution to Problem]

According to an exemplary embodiment of the disclosure, a foldable electronic device includes a foldable housing, a display module, a display drive circuit, a conductive sheet, an adhesive part, a magnetic element, and a film. The display module is disposed in the foldable housing. The display module includes a flexible display including a plurality of pixels. The display module includes an extension part extending from the flexible display. The extension part includes a first portion positioned between the flexible display and the foldable housing. The extension part includes a second portion extending while being bent toward the first portion from the flexible display. The display drive circuit is disposed on the first portion. The conductive sheet is disposed between the first portion and the foldable housing and coupled to the first portion. The adhesive part is disposed between the conductive sheet and the foldable housing. The magnetic element is disposed between the first portion and the foldable housing. The magnetic element is positioned between the adhesive part and the second portion when viewed from above the first portion. The film is disposed between the conductive sheet and the foldable housing and disposed on the conductive sheet while corresponding to the magnetic element. The magnetic element is positioned between the film and the foldable housing.

### [Advantageous Effects of Invention]

The foldable electronic device according to the exemplary embodiment of the disclosure may reduce or prevent damage to the flexible display module caused by foreign substances introduced from the outside during a process of assembling the constituent elements of the foldable electronic device, thereby improving the production yield.

Other effects, which may be obtained or expected by the various embodiments of the disclosure, will be directly or implicitly disclosed in the detailed description on the embodiments of the disclosure.

### [Brief Description of Drawings]

The above and other aspects, features, and advantages of specific embodiments of the disclosure will become clearer from the following detailed description, which is provided together with the accompanying drawings.
FIG. 1 is a view illustrating a foldable electronic device in an unfolded state according to an embodiment of the disclosure.
FIG. 2 is a view illustrating the foldable electronic device in a folded state according to the embodiment of the disclosure.
FIG. 3 is a cross-sectional view of a first display module, of the foldable electronic device, according to an embodiment of the disclosure, which may be combined with any of the preceding embodiments.
FIG. 4 is an exploded perspective view of the foldable electronic device according to an embodiment of the disclosure, which may be combined with any of the preceding embodiments.
FIGS. 5 and 6 are views illustrating a foldable housing in the unfolded state according to an embodiment of the disclosure, which may be combined with any of the preceding embodiments.
FIG. 7 is a view illustrating the foldable electronic device in the unfolded state according to an embodiment of the disclosure, which may be combined with any of the preceding embodiments.
FIG. 8 is a view illustrating the first display module including an adhesive part disposed between an conductive sheet and the foldable housing according to an embodiment of the disclosure, which may be combined with any of the preceding embodiments.
FIG. 9 is a cross-sectional view taken along line B-B' in FIG. 8 and illustrating the foldable electronic device and a cross-sectional view taken along line C-C' in FIG. 8 and illustrating the first display module and the third adhesive part according to an embodiment of the disclosure, which may be combined with any of the preceding embodiments.
FIG. 10 is a view illustrating the first display module, the first adhesive part, the second adhesive part, the third adhesive part, and the fourth adhesive part according to an embodiment of the disclosure, which may be combined with any of the preceding embodiments.
FIG. 11 is a cross-sectional view taken along line D-D' in FIG. 10 and illustrating the first display module and the third adhesive part according to an embodiment of the disclosure, which may be combined with any of the preceding embodiments.
FIG. 12 is a cross-sectional view taken along line D-D' in FIG. 10 and illustrating the first display module and the third adhesive part according to an embodiment of the disclosure, which may be combined with any of the preceding embodiments.

### [Mode for the Invention]

Hereinafter, various embodiments of the disclosure will be described in more detail with reference to the accompanying drawings.

Various embodiments of the disclosure and the terms used herein are not intended to limit the technological features set forth herein to particular embodiments and include various changes, equivalents, or replacements for a corresponding embodiment. In connection with the description of the drawings, the same or similar reference numerals may be used for the similar components. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

The term "module" may be a single integral component, or a minimum unit or part thereof, adapted to perform one or more functions.

Each component (e.g., a module or a program) of the above-described components may include a single entity or multiple entities. One or more of the above-described components may be omitted, or one or more other components may be added. Alternatively or additionally, a plurality of components (e.g., modules) may be integrated into a single component. In such a case, the integrated component may perform one or more functions of each of the plurality of components in the same or similar manner as they are performed by a corresponding one of the plurality of components before the integration.

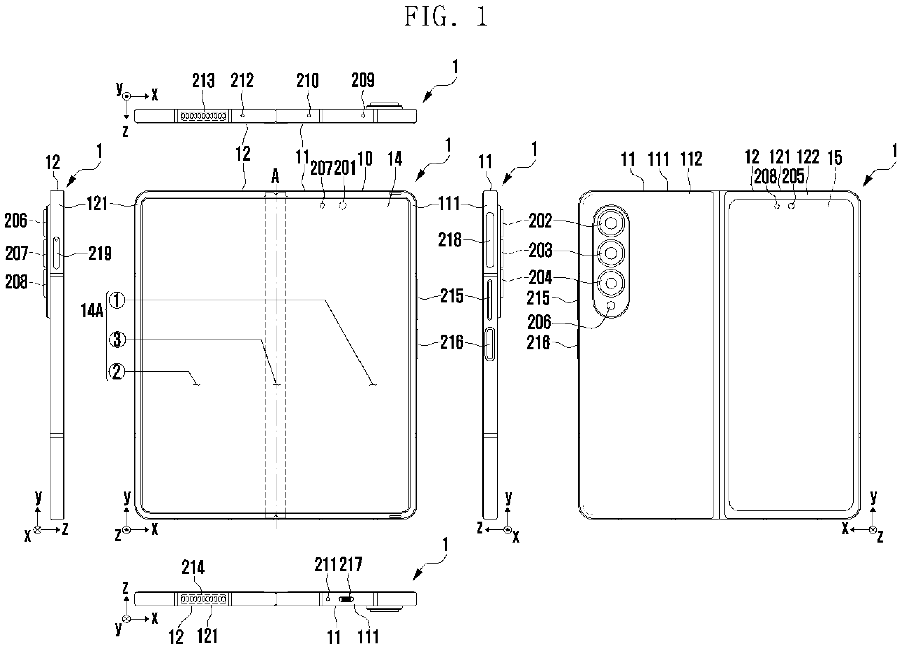

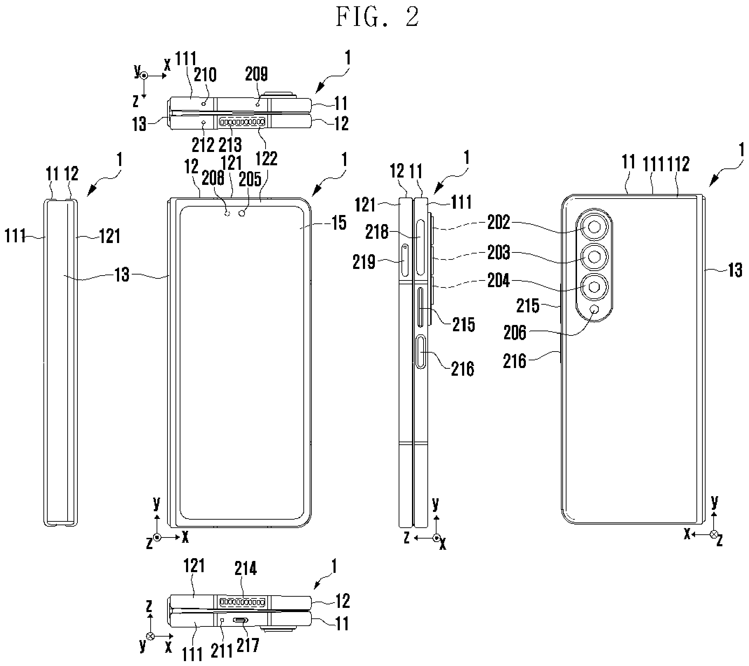

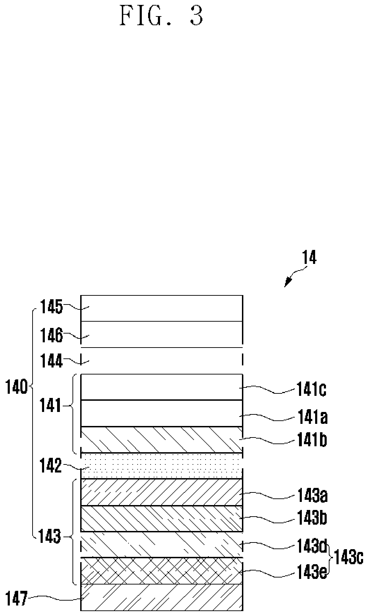

FIG. 1 is a view illustrating a foldable electronic device 1 in an unfolded state (or a flat state) according to an embodiment of the disclosure. FIG. 2 is a view illustrating the foldable electronic device 1 in a folded state (or a folding state) according to the embodiment of the disclosure. FIG. 3 is a cross-sectional view of a first display module 14, of the foldable electronic device 1, according to an embodiment of the disclosure, which may be combined with any of the preceding embodiments.

With reference to FIGS. 1 and 2, the foldable electronic device 1 includes a foldable housing 10, a first display module (e.g., a flexible display module or a foldable display module) 14, and/or a second display module 15.

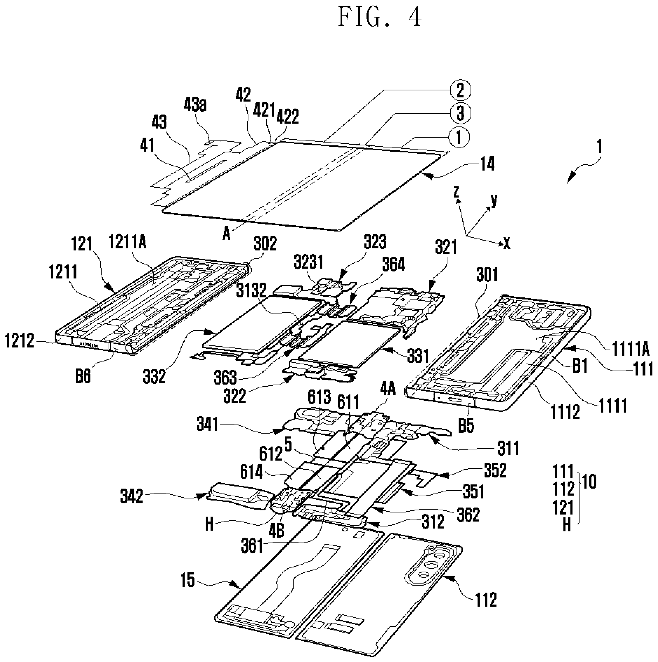

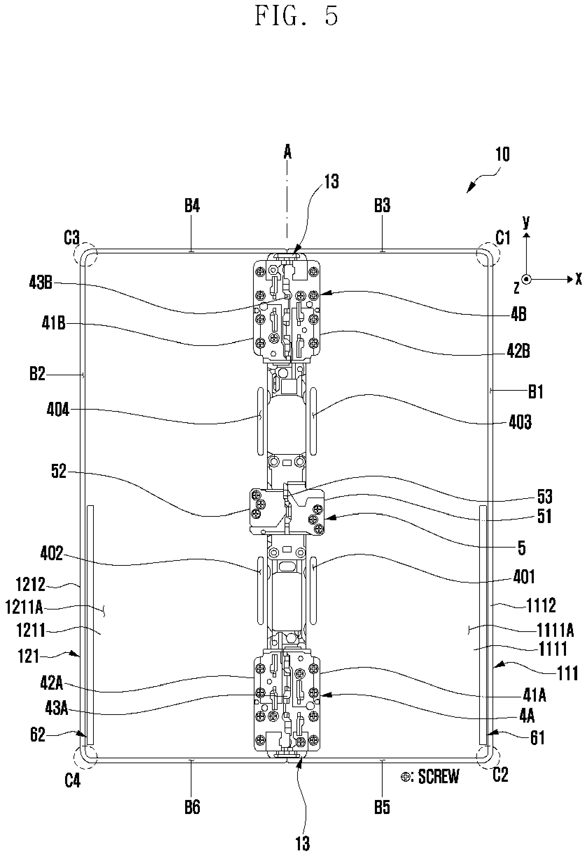

According to the embodiment, the foldable housing 10 may include a first housing (or a first housing part or a first housing structure) 11, a second housing (or a second housing part or a second housing structure) 12, a hinge housing 13, and/or a hinge part (e.g., a hinge part H in FIG. 4). The first housing 11 and the second housing 12 may be connected by the hinge part and rotate about the hinge part relative to each other. The hinge part may include one or more hinge modules (or hinge assemblies) (e.g., a first hinge module 4A, a second hinge module 4B, and a third hinge module 5 in FIG. 5).

According to the embodiment, the first display module 14 may include a display area 14A. The display area 14A may include a first display area ①, a second display area ②, and a third display area ③ configured to connect the first display area ① and the second display area ②. A first screen area (or a first active area), in which images may be displayed, may be provided by the first display area ①. A second screen area (or a first active area), in which images may be displayed, may be provided by the second display area ②. A third screen area (or a third active area), in which images may be displayed, may be provided by the third display area ③.

According to the embodiment, the first display area ① may be positioned to correspond to the first housing 11. The second display area ② may be positioned to correspond to the second housing 12. The third display area ③ may be positioned to correspond to the hinge part (e.g., the hinge part H in FIG. 4). The first display area ① may be disposed on the first housing 11, and a shape of the first display area ① may be maintained by being supported by the first housing 11. The second display area ② may be disposed on the second housing 12, and a shape of the second display area 02 may be maintained by being supported by the second housing 12. For example, the first display area ① and the second display area ② may be provided substantially flat. The unfolded state (see FIG. 1) of the foldable electronic device 1 may be a state in which the third display area ③ is disposed substantially flat. In the unfolded state of the foldable electronic device 1, the first display area ① and the second display area ② may define an angle of about 180 degrees, and the display area 14A may be provided (or disposed) in the form of a substantially flat surface. The third display area ③, which connects the first display area ① and the second display area ②, may be disposed flat because of a relative position between the first display area ① disposed on the first housing 11 and the second display area ② disposed on the second housing 12 in the unfolded state of the foldable electronic device 1. In the unfolded state of the foldable electronic device 1, the third display area ③ may be pulled from two opposite sides by the first display area ① and the second display area ②, and a pulling force may be provided to dispose the third display area ③ flat and reduce damage to the third display area ③. In the unfolded state of the foldable electronic device 1, the third display area ③ is pulled by the first display area ① and the second display area ②, such that stress may be reduced, and the third display area ③ may have an extended width so that the third display area ③ may be disposed flat.

According to the embodiment, in the unfolded state of the foldable electronic device 1, the hinge part (e.g., the hinge part H in FIG. 4) may support the third display area ③. In case that an external force (e.g., external pressure such as a touch input made by a user's finger or a touch input made by an electronic pen) is applied to the third display area ③ in the unfolded state of the foldable electronic device 1, the hinge part may reduce a sag of the third display area ③ and contribute to allowing the third display area ③ to be maintained to be flat. In case that external impact is applied because of a fall of the foldable electronic device 1 or the like in the unfolded state of the foldable electronic device 1, the hinge part may be constituted to reduce the influence of the external impact applied to the third display area ③. In the unfolded state of the foldable electronic device 1, the hinge part supports the third display area ③ so that the third display area ③ may be disposed flat with no or reduced sagging. Therefore, it is possible to reduce creases.

According to the embodiment, the display area 14A of the first display module 14 may substantially provide a 'front surface' of an external appearance of the foldable electronic device 1. The front surface of the foldable electronic device 1 may include a first front surface area provided by the first display area ①, a second front surface area provided by the second display area ②, and a third front surface area provided by the third display area ③. The illustrated coordinate axes are illustrated based on the first housing 11, and an +z-axis direction may be understood as a direction substantially directed toward the flat first front surface area. In the unfolded state (see FIG. 1) of the foldable electronic device 1, the front surface of the foldable electronic device 1 may be provided in the form of a substantially flat surface.

According to the embodiment, the foldable electronic device 1 may be implemented in an in-folding manner so that the display area 14A (or the front surface of the foldable electronic device 1 through which the display area 14A is visually recognized) may be folded inward. FIG. 2 illustrates a fully folded state of the foldable electronic device 1 in which the first housing 11 and the second housing 12 are disposed so as not to become closer to each other any further. In the fully folded state of the foldable electronic device 1, the first display area ① and the second display area ② (or the first front surface area and the second front surface area) may face each other. In the fully folded state of the foldable electronic device 1, the third display area ③ may be disposed in a bent shape. In the fully folded state of the foldable electronic device 1, an angle between the first housing 11 and the second housing 12 (or an angle between the first display area ① and the second display area ② or an angle between the first front surface area and the second front surface area) may be about 0 to about 10 degrees, and the display area 14A may be substantially invisible. Although not illustrated, an intermediate state of the foldable electronic device 1 may be a state between the unfolded state and the fully folded state. In the intermediate state in which an angle between the first housing 11 and the second housing 12 is a predetermined angle or more, it is possible to provide a use environment in which the user may use the display area 14A without substantial difficulty. Hereinafter, 'the folded state of the foldable electronic device 1' disclosed in the disclosure may refer to the fully folded state as opposed to the intermediate state that is a less folded state.

According to the embodiment, in the unfolded state (see FIG. 1) of the foldable electronic device 1, the display area 14A of the first display module 14 may be symmetric with respect to a centerline A of the foldable electronic device 1. In the unfolded state of the foldable electronic device 1, the centerline A of the foldable electronic device 1 may correspond to a middle portion of a width of the third display area ③ extending from a first boundary between the first display area ① and the third display area ③ to a second boundary between the second display area ② and the third display area ③.

According to the embodiment, in the folded state (see FIG. 2) of the foldable electronic device 1, the third display area ③ disposed in a bent shape may be substantially symmetric with respect to the centerline A of the foldable electronic device 1.

According to the embodiment, in the unfolded state of the foldable electronic device 1, the display area 14A (or the front surface of the foldable electronic device 1) may have a substantially rectangular shape.

According to the embodiment, the first housing 11 may include a first frame (or a first frame structure or a first framework) 111, and a first cover 112 disposed on (or coupled to) the first frame 111. A combination of the first frame 111 and the first cover 112 may provide a 'first rear surface area' and a 'first side surface area' of the external appearance of the foldable electronic device 1. The first frame 111 may provide the first side surface area of the foldable electronic device 1. The first cover 112 may provide the first rear surface area of the foldable electronic device 1. The first rear surface area may be directed in a direction opposite to a direction of the first front surface area of the foldable electronic device 1 provided by the first display area ①.

According to the embodiment, the first frame 111 may include a first side (or a first lateral portion, a first lateral member, a first lateral structure, or a first lateral bezel structure) (e.g., a first side 1112 in FIG. 4). The first side may surround at least a part of a space between the first display area ① and the first cover 112 and provide the first side surface area of the foldable electronic device 1.

According to the embodiment, the first frame 111 may include a first support part (e.g., a first support part 1111 in FIG. 4) extending from the first side (e.g., the first side 1112 in FIG. 4) or connected to the first side. The first support part may be at least partially positioned between the first display area ① and the first cover 112. The first display area ① may be disposed on the first support part, and the first support part may support the first display area ①.

According to the embodiment, various electrical constituent elements (or electronic components), such as a printed circuit board or a battery, may be at least partially disposed between the first frame 111 and the first cover 112 and disposed on the first support part (e.g., the first support part 1111 in FIG. 4) of the first frame 111.

According to the embodiment, the second housing 12 may include a second frame (or a second frame structure or a second framework) 121, and/or a second cover 122 disposed on the second frame 121. A combination of the second frame 121 and the second cover 122 may provide a 'second rear surface area' and a 'second side surface area' of the external appearance of the foldable electronic device 1. The second frame 121 may provide the second side surface area of the foldable electronic device 1. The second cover 122 may provide the second rear surface area of the foldable electronic device 1. The second rear surface area may be directed in a direction opposite to a direction of the second front surface area of the foldable electronic device 1 provided by the second display area ②.

According to the embodiment, the second frame 121 may include a second side (or a second lateral portion, a second lateral member, a second lateral structure, or a second lateral bezel structure) (e.g., a second side 1212 in FIG. 3). The second side may surround at least a part of a space between the second display area ② and the second cover 122 and provide the second side surface area of the foldable electronic device 1.

According to the embodiment, the second frame 121 may include a second support part (e.g., a second support part 1211 in FIG. 4) extending from the second side (e.g., the second side 1212 in FIG. 4) or connected to the second side. The second support part may be at least partially positioned between the second display area ② and the second cover 122. The second display area ② may be disposed on the second support part, and the second support part may support the second display area ②.

According to the embodiment, various electrical constituent elements (or electronic components), such as the printed circuit board or the battery, may be at least partially disposed between the second frame 121 and the second cover 112 and disposed on the second support part (e.g., the second support part 1211 in FIG. 4) of the second frame 121.

According to the embodiment, in the folded state (see FIG. 2) of the foldable electronic device 1, the first side (e.g., the first side 1112 in FIG. 4) of the first frame 111 and the second side (e.g., the second side 1212 in FIG. 4) of the second frame 121 may be aligned to overlap each other.

According to the embodiment, the hinge housing (or the hinge cover) 13 may be connected to one or more hinge modules (e.g., the first hinge module 4A, the second hinge module 4B, and the third hinge module 5 in FIG. 4). The one or more hinge modules may connect the first support part (e.g., the first support part 1111 in FIG. 4) of the first frame 111 and the second support part 1211 of the second frame 121.

According to the embodiment, when the foldable electronic device 1 switches from the unfolded state (see FIG. 1) to the folded state (see FIG. 2), the relative position between the first frame 111 and the second frame 121 connected to each other by the hinge part (e.g., the hinge part H in FIG. 4) is changed, and the state of the hinge part coupled to the hinge housing 13 is changed, such that a gap between the first frame 111 and the second frame 121 may be opened at a side opposite to the third display area ③. The hinge housing 13 may be exposed through the opened gap. The hinge housing 13 may be exposed to a large degree in the folded state (see FIG. 2) of the foldable electronic device 1 than in the intermediate state of the foldable electronic device 1. In the folded state of the foldable electronic device 1, the hinge housing 13 may be a part of the external appearance that covers the interior of the foldable electronic device 1. In the folded state of the foldable electronic device 1, a side surface of the foldable electronic device 1 may include a first side surface area provided by the first side (e.g., the first side 1112 in FIG. 4) of the first frame 111, a second side surface area provided by the second side (e.g., the second side 1212 in FIG. 4) of the second frame 121, and a third side surface area provided by the hinge housing 13.

According to the embodiment, when the foldable electronic device 1 switches from the folded state (see FIG. 2) to the unfolded state (see FIG. 1), the relative position between the first frame 111 and the second frame 121 connected to each other by the hinge part (e.g., the hinge part H in FIG. 4) is changed, and the state of the hinge part coupled to the hinge housing 13 is changed, such that the gap between the first frame 111 and the second frame 121 may be closed at the side opposite to the third display area ③. The hinge housing 13 may not be exposed to the outside.

With reference to FIG. 3, in the embodiment, the first display module 14 may include a flexible display 140 and a support sheet 147.

According to the embodiment, the flexible display 140 may include a display panel 141, a base film 142, a lower panel 143, an optical layer 144, a transparent cover 145, and/or an optically transparent adhesive part 146. The display panel 141 may be disposed between the base film 142 and the optical layer 144. The base film 142 may be disposed between the display panel 141 and the lower panel 143. The optical layer 144 may be disposed between the display panel 241 and the optically transparent adhesive part 246. The optically transparent adhesive part 146 may be disposed between the optical layer 144 and the transparent cover 145. For example, the optically transparent adhesive part 146 may include optical clear adhesive (OCA), optical clear resin (OCR), or super view resin (SVR). Various polymer adhesive materials (or adhesive members) or bonding materials (or bonding members) (not illustrated separately) may be disposed between the display panel 141 and the base film 142, between the base film 142 and the lower panel 143, and/or between the display panel 141 and the optical layer 144.

According to the embodiment, the display panel 141 may include a light-emitting layer 141a, a thin-film transistor (TFT) film (or a TFT substrate) 141b, and/or an encapsulation layer (e.g., thin-film encapsulation (TFE)) 141c. For example, the light-emitting layer 141a may include a plurality of pixels implemented by light-emitting elements such as organic light-emitting diodes (OLEDs) or micro LEDs. The light-emitting layer 141a may be disposed on the TFT film 141b by depositing (evaporating) organic materials. The TFT film 141b may be positioned between the light-emitting layer 141a and the base film 142. The TFT film 141b may refer to a film structure in which at least one TFT is disposed on a flexible substrate (e.g., a polyimide (PI) film) by a series of processes such as deposition, patterning, and/or etching. At least one TFT may turn on or off the pixel or adjust brightness of the pixel by controlling electric current in respect to the light-emitting element of the light-emitting layer 141a. For example, at least one TFT may be implemented as an a-Si (amorphous silicon) TFT, an LCP (liquid crystalline polymer) TFT, an LTPO (low-temperature polycrystalline oxide) TFT, or an LTPS (low-temperature polycrystalline silicon) TFT.

According to the embodiment, the display panel 141 may include a storage capacitor. The storage capacitor may maintain a voltage signal in the pixel, maintain a voltage applied to the pixel in a single frame, or reduce a change in gate voltage of the TFT caused by leakage current (leakage) for a light-emitting time. A routine (e.g., initialization or data write) for controlling at least one TFT may allow the storage capacitor to maintain the voltage applied to the pixel at a predetermined time interval.

According to the embodiment, the display panel 141 may be implemented by an OLED, and the encapsulation layer 141c may cover the light-emitting layer 141a. The organic material and the electrode of the OLED, which emit light, are very sensitive to oxygen and/or moisture and may lose the light-emitting characteristics. In order to reduce or prevent the loss of the light-emitting characteristics, the encapsulation layer 141c may seal the light-emitting layer 141a so that oxygen and/or moisture is not introduced into the OLED. The encapsulation layer 141c may serve as a pixel protection layer for protecting the plurality of pixels of the light-emitting layer 141a.

According to the embodiment, the base film 142 may include a flexible film made of polymer or plastic such as PI or polyethylene terephthalate (PET). The base film 142 may serve to support and protect the display panel 141. In various embodiments, the base film 142 may be called 'a protective film,' a 'back film,' or a 'backplate'.

According to the embodiment, the lower panel 143 may include a plurality of layers for various functions. Various polymer adhesive materials (or bonding materials) (not illustrated separately) may be disposed between the plurality of layers included in the lower panel 143. For example, the lower panel 143 may include a light-blocking layer 143a, a buffer layer 143b, or a lower layer 143c. The light-blocking layer 143a may be positioned between the base film 142 and the buffer layer 143b. The buffer layer 143b may be positioned between the light-blocking layer 143a and the lower layer 143c. The light-blocking layer 143a may block at least a part of light introduced from the outside. For example, the light-blocking layer 143a may include an embossed layer. The embossed layer may be a black layer including an unevenness pattern. The buffer layer 143b may mitigate external impact applied to the flexible display 140. For example, the buffer layer 143b may include a sponge layer or a cushion layer. The lower layer 143c may diffuse, disperse, or dissipate heat generated from the foldable electronic device 1 or the flexible display 140. The lower layer 143c may absorb or block electromagnetic waves. The lower layer 143c may mitigate external impact applied to the foldable electronic device 1 or the flexible display 140.

According to the embodiment, the lower layer 143c may include a composite sheet 143d or a copper sheet 143e. The composite sheet 143d may be a sheet made by combining and processing layers or sheets having different properties. For example, the composite sheet 143d may include at least one of polyimide and graphite. The composite sheet 143d may be substituted with a single sheet including a single material (e.g., polyimide or graphite). The composite sheet 143d may be positioned between the buffer layer 143b and the copper sheet 143e. The copper sheet 143e may be substituted with various other metal sheets.

According to various embodiments, at least a part of the lower layer 143c may include a conductive member (e.g., a metal plate). The conductive member of the lower layer 143c may assist in reinforcing the rigidity of the foldable electronic device 1. The conductive member of the lower layer 143c may block surrounding noise. The conductive member of the lower layer 143c may be used to disperse heat discharged from peripheral heat-radiating components (e.g., a display drive circuit 41 in FIG. 4). For example, the conductive member of the lower layer 143c may include at least one of copper (Cu), aluminum (Al), SUS (stainless steel), and CLAD (e.g., a stack member in which SUS and Al are alternately disposed).

According to various embodiments, the lower layer 143c may include various layers for various other functions.

According to various embodiments, at least one of additional polymer layers (e.g., layers including PI, PET, or thermoplastic polyurethane (TPU)) may be further disposed on a rear surface of the display panel 141 in addition to the base film 142.

According to various embodiments, at least one of the plurality of layers (e.g., the light-blocking layer 143a, the buffer layer 143b, the composite sheet 143d, and the copper sheet 143e) included in the lower panel 143 may be excluded.

According to various embodiments, the arrangement order of the plurality of layers included in the lower panel 143 may be variously changed without being limited to the illustrated embodiment.

According to the embodiment, the optical layer 144 may include a polarizing layer (or a polarizer), or a phase delay layer (a retardation layer or a retarder). The polarizing layer and phase delay layer may improve outdoor visibility of the screen. For example, the optical layer 144 may selectively transmit light that is generated from a light source of the display panel 141 and vibrates in a predetermined direction. In various embodiments, the polarizing layer and the phase delay layer may be combined to provide a single layer, and this layer may be defined or interpreted as a 'circularly polarized light layer'.

According to various embodiments, the polarizing layer (or the circularly polarized light layer) may be excluded. In this case, the black PDL (pixel define layer) and/or a color filter for substituting for the polarizing layer may be provided.

According to the embodiment, the transparent cover 145 may protect the flexible display 140 from the outside. The transparent cover 145 may provide the front surface of the foldable electronic device 1. The transparent cover 145 may be provided in the form of a thin film (e.g., a thin-film layer) having flexibility. For example, the transparent cover 145 may include a plastic film (e.g., a PI film) or a thin-film glass (e.g., ultra-thin glass (UTG)). In various embodiments, the transparent cover 145 may include a plurality of layers. For example, the transparent cover 145 may have a shape in which various coating layers are disposed on a plastic film or a thin-film glass. For example, the transparent cover 145 may have a shape in which at least one protective layer or coating layer including a polymer material (e.g., PET, PI (polyimide), or TPU) is disposed on a plastic film or thin-film glass.

According to various embodiments, the transparent cover 145 and the optically transparent adhesive part 146 may be interpreted as elements provided separately from the flexible display 140. In various embodiments, the transparent cover 145 may be defined or interpreted as a part of the foldable housing 10.

According to the embodiment, the foldable electronic device 1 may include a touch detection circuit (e.g., touch sensor) (not illustrated separately). The touch detection circuit may be implemented as a transparent conductive layer (or film) based on various electrically conductive materials such as ITO (indium tin oxide).

According to the embodiment, the touch detection circuit (not illustrated separately) may be an add-on type and disposed between the transparent cover 145 and the optical layer 144.

According to various embodiments, the touch detection circuit (not illustrated separately) may be an on-cell type and disposed between the optical layer 144 and the display panel 141.

According to various embodiments, the display panel 141 may be an in-cell type and include a touch detection circuit or a touch detection function.

According to various embodiments, the flexible display 140 may include a conductive pattern (not illustrated separately), such as a metal mesh (e.g., aluminum metal mesh), as a touch detection circuit provided between the encapsulation layer 141c and the optical layer 144 and disposed on the encapsulation layer 141c. In order to correspond to the curved flexible display 1400, the metal mesh may have higher durability than the transparent conductive layer implemented by ITO.

According to various embodiments, the flexible display 140 may further include a pressure sensor (not illustrated separately) capable of measuring intensity (pressure) of a touch.

According to various embodiments, the first display module 14 may include an electromagnetic induction panel (e.g., a digitizer) (not illustrated separately) configured to detect a magnetic field-type pen input device (e.g., an electronic pen or a stylus pen).

According to various embodiments, the plurality of layers included in the display panel 141 or the lower panel 143, the layered structure thereof, or the stacking order may be variously implemented. The flexible display 140 may be implemented by excluding some of the constituent elements or adding other constituent elements in accordance with the tendency of the provided form or convergence.

According to the embodiment, the support sheet (or a support plate or a support layer) 147 may be disposed on the rear surface of the flexible display 140. The rear surface of the flexible display 140 may refer to a surface positioned opposite to a surface through which light is emitted from the display panel 141 including the plurality of pixels. For example, the support sheet 147 may cover at least a part of the lower panel 143 of the flexible display 140 and be disposed on (e.g., attached to) the rear surface of the lower panel 143. The support sheet 147 may be coupled to the lower panel 143 by means of an adhesive material (or a bonding material) (not illustrated separately).

According to the embodiment, the flexible display 140 and the support sheet 147 may be coupled by means of a material (not illustrated separately) such as a thermally reactive adhesive material (or a thermally reactive bonding material), a photoreactive adhesive material (or a photoreactive bonding material), a general adhesive agent (or a general bonding agent), or a double-sided tape.

According to various embodiments, the flexible display 140 and the support sheet 147 may be coupled by means of various polymers such as triazine thiol, dithiodipyridine, or silane-based compound or an organic adhesive material (or an organic material bonding material) such as sealant.

According to the embodiment, the support sheet 147 may contribute to improving the durability (e.g., reinforcing the rigidity) of the first display module 14. The support sheet 147 may reduce the influence of a load or stress applied to the first display module 14 when the foldable electronic device 1 is in the folded state.

According to the embodiment, the support sheet 147 may include a metallic material. For example, the support sheet 147 may include stainless steel. The support sheet 147 may include various other metallic materials.

According to various embodiments, the support sheet 147 may include engineering plastic.

According to the embodiment, the support sheet 147 may include a lattice structure (not illustrated separately) that overlaps at least a part of the third display area ③ of the flexible display module 14. For example, the lattice structure may include a plurality of openings (or slits) provided in the support sheet 147. The lattice structure may refer to a pattern structure in which the plurality of openings is regularly arranged. The plurality of openings may be periodically formed and have substantially the same shape, and the plurality of openings may be arranged repeatedly at predetermined intervals. The lattice structure may reduce the deterioration in flexibility of the third display area ③ of the flexible display module 14. In various embodiments, the lattice structure including the plurality of openings may be referred to as other terms such as an 'opening pattern,' a 'hole pattern,' or a 'lattice pattern'.

According to various embodiments, the support sheet 147 may include a recess pattern (not illustrated separately) that may be substituted for the lattice structure and include a plurality of recesses. For example, the recess pattern may refer to a pattern structure in which the plurality of recesses is regularly arranged and provided in a first surface of the support sheet 147, which faces the lower panel 143 of the flexible display 140, or a second surface of the support sheet 147 that is positioned at a side opposite to the first surface.

According to various embodiments, the lattice structure or the recess pattern may be expanded to the first display area ① and/or the second display area ② of the flexible display module 14.

According to various embodiments, the support sheet 147 including the lattice structure or the recess pattern may have a plurality of layers, or the conductive member corresponding to the support sheet 147 may have a plurality of layers.

According to various embodiments, the support sheet 147 may reduce electromagnetic interference (EMI) related to the flexible display 140.

According to various embodiments, the support sheet 147 may diffuse or display heat discharged from the heat-radiating component (e.g., the display drive circuit 41 in FIG. 4).

According to various embodiments, the support sheet 147 may be interpreted as an element provided separately from the first display module 14.

According to the embodiment, the second display module 15 may be positioned between the second frame 121 and the second cover 122. The second cover 122 may be substantially transparent, and the second display module 15 may be recognized through the second cover 122. The foldable electronic device 1 may be substituted for the first display module 14 and constituted to display an image through the second display module 15 in the folded state (see FIG. 2).

According to the embodiment, the second display module 15 may include a display panel (e.g., the display panel 141 in FIG. 3), a base film (e.g., the base film 142 in FIG. 3), a lower panel (e.g., the lower panel 143 in FIG. 3), and/or an optical layer (e.g., the optical layer 144 in FIG. 3). An optically transparent adhesive part (or an optically transparent bonding part) may be disposed between the optical layer and the second cover 122.

According to the embodiment, the second display module 15 may be implemented to be substantially rigid. For example, the base film (e.g., the base film 142 in FIG. 3) included in the second display module 15 may be substantially rigid.

According to various embodiments, the second display module 15 may be implemented to be substantially flexible.

According to various embodiments, the second display module 15 may be provided in a shape including the second cover 122. In this case, the second cover 122 may be excluded from the foldable housing 10.

According to the embodiment, the foldable electronic device 1 may include at least one of one or more camera modules, one or more light-emitting modules, one or more sensor modules, one or more sound input modules, one or more sound output modules, one or more key input modules, and/or one or more connection terminals. The foldable electronic device 1 may exclude at least one of the above-mentioned constituent elements or may additionally include other constituent elements. The positions of the constituent elements or the number of constituent elements may be variously implemented.

According to the embodiment, the one or more camera modules may include a first camera module 201, a second camera module 202, a third camera module 203, a fourth camera module 204, and/or a fifth camera module 205. The first camera module 201, the second camera module 202, the third camera module 203, the fourth camera module 204, or the fifth camera module 205 may include one or more lenses, one or more image sensors, and/or one or more image signal processors (image signal processors (ISPs)).

According to the embodiment, the first camera module 201 may be accommodated in the first housing 11 while corresponding to the first front surface area of the foldable electronic device 1.

According to the embodiment, the first camera module 201 may overlap the first display area ① of the first display module 14 when viewed from above the first front surface area of the foldable electronic device 1. The first camera module 201 may be positioned on a rear surface of the first display area ① or positioned below the first display area ①. The position of the first camera module 201 or the first camera module 201 may not be substantially visually distinguished (or exposed) when viewed from the outside of the foldable electronic device 1. For example, the first camera module 201 may include a hidden under-display camera (e.g., a UDC). External light may reach the first camera module 201 through the transparent cover 145 and the flexible display 140.

According to various embodiments, the first camera module 201 may be aligned and positioned in a recess (not illustrated separately) provided in the rear surface of the first display area ①, or the first camera module 201 may be at least partially inserted into the recess. The position of the first camera module 201 or the first camera module 201 may not be visually distinguished (or exposed) when viewed from the outside of the foldable electronic device 1.

According to various embodiments, a partial area in the first display area ①, which at least partially overlaps the first camera module 201, may include a pixel structure and/or a wiring structure different from those in another area. The pixel structure and/or the wiring structure provided in the partial area in the first display area ①, which at least partially overlaps the first camera module 201, may be implemented to reduce a loss of light between the outside of the foldable electronic device 1 and the first camera module 201. For example, the partial area in the first display area ①, which at least partially overlaps the first camera module 201, may have a pixel density (e.g., the number of pixels per unit area) different from that in another area. As another example, the partial area in the first display area ①, which at least partially overlaps the first camera module 201, may not substantially include the plurality of pixels.

According to various embodiments, the illustrated embodiment may be modified such that the first camera module 201 is accommodated in the second housing 12 while corresponding to the second front surface area of the foldable electronic device 1. In various embodiments, an additional camera module (not illustrated separately) may be accommodated in the second housing 12 while corresponding to the second front surface area of the foldable electronic device 1.

According to the embodiment, the second camera module 202, the third camera module 203, and the fourth camera module 204 may be accommodated in the first housing 11 while corresponding to the first cover 112 (or the first rear surface area of the foldable electronic device 1). The first cover 112 may include a first camera hole (or a first light transmission area) corresponding to the second camera module 202. The first cover 112 may include a second camera hole (or a second light transmission area) corresponding to the third camera module 203. The first cover 112 may include a third camera hole (or a third light transmission area) corresponding to the fourth camera module 204. The position of the camera module or the number of camera modules, which are accommodated in the first housing 11 while corresponding to the first cover 112, may be variously implemented without being limited to the illustrated example.

According to the embodiment, the second camera module 202, the third camera module 203, or the fourth camera module 204 may include a wide-angle camera module, a telephoto camera module, a color camera module, a monochrome camera module, or an IR camera module (e.g., a TOF camera module or a structured light camera module).

According to the embodiment, the second camera module 202, the third camera module 203, and the fourth camera module 204 may have different attributes (e.g., view angles) or functions.

According to various embodiments, the second camera module 202, the third camera module 203, or the fourth camera module 204 may provide different view angles (or lenses with different view angles). The foldable electronic device 1 may selectively use the view angle of the second camera module 202, the third camera module 203, or the fourth camera module 204 on the basis of the user's selection related to the view angles.

According to the embodiment, the fifth camera module 205 may be accommodated in the second housing 12 while corresponding to the second cover 122 (or the second rear surface area of the foldable electronic device 1).

According to the embodiment, the fifth camera module 205 may be aligned and positioned in an opening provided in the second display module 15, or the fifth camera module 205 may be at least partially inserted into the opening. External light may reach the fifth camera module 205 through the opening provided in the second cover 122 and the second display module 15. The opening of the second display module 15, which is aligned with or overlaps the fifth camera module 205, may be a through-hole. In various embodiments, the opening of the second display module 15, which is aligned with or overlaps the fifth camera module 205, may be provided in the form of a notch (not illustrated separately).

According to various embodiments, the fifth camera module 205 may overlap the second display module 15 when viewed from above the second rear surface area of the foldable electronic device 1. The fifth camera module 205 may be positioned on a rear surface of the second display module 15 or positioned below the second display module 15. The position of the fifth camera module 205 or the fifth camera module 205 may not be substantially visually distinguished (or exposed) when viewed from the outside of the foldable electronic device 1. For example, the fifth camera module 205 may include a hidden under-display camera (e.g., a UDC). External light may reach the fifth camera module 205 through the second cover 122 and the second display module 15.

According to various embodiments, the fifth camera module 205 may be aligned and positioned in a recess (not illustrated separately) provided in the rear surface of the second display module 15, or the fifth camera module 205 may be at least partially inserted into the recess. The position of the fifth camera module 205 or the fifth camera module 205 may not be visually distinguished (or exposed) when viewed from the outside of the foldable electronic device 1.

According to various embodiments, a partial area of the second display module 15, which at least partially overlaps the fifth camera module 205, may include a pixel structure and/or a wiring structure different from those in another area. The pixel structure and/or the wiring structure provided in the partial area of the second display module 15, which at least partially overlaps the fifth camera module 205, may be implemented to reduce a loss of light between the outside of the foldable electronic device 1 and the fifth camera module 205. For example, the partial area of the second display module 15, which at least partially overlaps the fifth camera module 205, may have a pixel density (e.g., the number of pixels per unit area) different from that in another area. As another example, the partial area of the second display module 15, which at least partially overlaps the fifth camera module 205, may not substantially include the plurality of pixels.

According to various embodiments, the first camera module 201, the second camera module 202, the third camera module 203, the fourth camera module 204, or the fifth camera module 205 may operate as at least a part of the sensor module. For example, the IR camera module may operate as at least a part of the sensor module.

According to the embodiment, among the one or more light-emitting modules, any one light-emitting module 206 may be accommodated in the first housing 11 while corresponding to the first cover 112 (or the first rear surface area of the foldable electronic device 1). The first cover 112 may include a flash hole (or a fourth light transmission area) corresponding to the light-emitting module 206. For example, the light-emitting module 206 may include an LED or a xenon lamp. The light-emitting module 206 may include a light source for the second camera module 202, the third camera module 203, and/or the fourth camera module 204.

According to the embodiment, among the one or more light-emitting modules, any one light-emitting module (e.g., an LED, an infrared (IR) LED, or a xenon lamp) (not illustrated separately) may be accommodated in the foldable housing 10 while corresponding to the front surface of the foldable electronic device 1. The light emitting module may provide status information on the foldable electronic device 1 in the form of light. In various embodiments, the light-emitting module may provide a light source that operates in conjunction with an operation of the first camera module 201.

According to the embodiment, the one or more sensor modules may include a first sensor module 207 or a second sensor module 208. The first sensor module 207 may be accommodated in the foldable housing 10 while corresponding to the front surface of the foldable electronic device 1. The second sensor module 208 may be accommodated in the foldable housing 10 while corresponding to the rear surface of the foldable electronic device 1.

According to the embodiment, the first sensor module 207 or the second sensor module 208 may include an optical sensor. The optical sensor may include, for example, a proximity sensor or an illumination sensor.

According to the embodiment, the first sensor module 207 may overlap the first display area ① of the first display module 14 when viewed from above the first front surface area of the foldable electronic device 1. The first sensor module 207 may be disposed on the rear surface of the first display area ① or positioned below the first display area ①. The position of the first sensor module 207 or the first sensor module 207 may not be substantially visually distinguished (or exposed) when viewed from the outside of the foldable electronic device 1. External light may reach the first sensor module 207 through the transparent cover 145 and the flexible display 140.

According to various embodiments, the first sensor module 207 may be aligned and positioned in a recess (not illustrated separately) provided in the rear surface of the first display area ①, or the first sensor module 207 may be at least partially inserted into the recess. For example, the first display module 14 may include a third opening provided in the lower panel 143 of the flexible display 140, and a fourth opening provided in the support sheet 147. The third and fourth openings may overlap each other when viewed from above the first front surface area of the foldable electronic device 1. The recess may be provided by a combination of the third and fourth openings. The position of the first sensor module 207 or the first sensor module 207 may not be visually distinguished (or exposed) when viewed from the outside of the foldable electronic device 1.

According to various embodiments, a partial area in the first display area ①, which at least partially overlaps the first sensor module 207, may include a pixel structure and/or a wiring structure different from those in another area. The pixel structure and/or the wiring structure provided in the partial area in the first display area ①, which at least partially overlaps the first sensor module 207, may be implemented to reduce a loss of light between the outside of the foldable electronic device 1 and the first sensor module 207. For example, the partial area in the first display area ①, which at least partially overlaps the first sensor module 207, may have a pixel density (e.g., the number of pixels per unit area) different from that in another area. As another example, the partial area in the first display area ①, which at least partially overlaps the first sensor module 207, may not substantially include the plurality of pixels.

According to the embodiment, the second sensor module 208 may overlap the second display module 15 when viewed from above the second rear surface area of the foldable electronic device 1. The second sensor module 208 may be disposed on the rear surface of the second display module 15 or disposed below the second display module 15. The position of the second sensor module 208 or the second sensor module 208 may not be substantially visually distinguished (or exposed) when viewed from the outside of the foldable electronic device 1. External light may reach the second sensor module 208 through the second cover 122 and the second display module 15.

According to various embodiments, the second sensor module 208 may be aligned and positioned in a recess (not illustrated separately) provided in the rear surface of the second display module 15, or the second sensor module 208 may be at least partially inserted into the recess. The position of the second sensor module 208 or the second sensor module 208 may not be visually distinguished (or exposed) when viewed from the outside of the foldable electronic device 1.

According to various embodiments, a partial area of the second display module 15, which at least partially overlaps the second sensor module 208, may include a pixel structure and/or a wiring structure different from those in another area. The pixel structure and/or the wiring structure provided in the partial area of the second display module 15, which at least partially overlaps the second sensor module 208, may be implemented to reduce a loss of light between the outside of the foldable electronic device 1 and the second sensor module 208. For example, the partial area of the second display module 15, which at least partially overlaps the second sensor module 208, may have a pixel density (e.g., the number of pixels per unit area) different from that in another area. As another example, the partial area of the second display module 15, which at least partially overlaps the second sensor module 208, may not substantially include the plurality of pixels.

According to various embodiments, the second sensor module 208 may be aligned and positioned in an opening provided in the second display module 15, or the second sensor module 208 may be at least partially inserted into a recess. External light may reach the second sensor module 208 through the openings of the second cover 122 and the second display module 15.

According to various embodiments, the first sensor module 207 or the second sensor module 208 may include various other sensors (e.g., an optical, static capacitance type, or ultrasonic biosensor (e.g., a fingerprint sensor)) without being limited to the optical sensor such as a proximity sensor or an illuminance sensor.

According to the embodiment, the one or more sound input modules may include a first microphone (not illustrated separately), a second microphone (not illustrated separately), a third microphone (not illustrated separately), and/or a fourth microphone (not illustrated separately). The first microphone may be positioned in the internal space of the first housing 11 while corresponding to a first microphone hole 209 provided at the first side (e.g., the first side 1112 in FIG. 4) of the first housing 11. The second microphone may be positioned in the internal space of the first housing 11 while corresponding to a second microphone hole 210 provided at the first side (e.g., the first side 1112 in FIG. 4) of the first housing 11. The third microphone may be positioned in the internal space of the first housing 11 while corresponding to a third microphone hole 211 provided at the first side (e.g., the first side 1112 in FIG. 4) of the first housing 11. The fourth microphone may be positioned in the internal space of the second housing 12 while corresponding to a fourth microphone hole 212 provided at the second side (e.g., the second side 1212 in FIG. 4) of the second housing 12. The position of the microphone, the number of microphones, the position of the microphone hole corresponding to the microphone, or the number of microphone holes may be variously implemented without being limited to the illustrated example.

According to the embodiment, the one or more sound output modules may include a first speaker (not illustrated separately), a second speaker (not illustrated separately), and/or a third speaker (not illustrated separately). The first speaker or the second speaker may be a speaker for multimedia playback or recording playback. The third speaker may include a telephone receiver.

According to the embodiment, the first speaker may be accommodated in the second housing 12 while corresponding to a first speaker hole 213 provided at the second side (e.g., the second side 1212 in FIG. 4) of the second housing 12. The second speaker may be accommodated in the second housing 12 while corresponding to a second speaker hole 214 provided at the second side (e.g., the second side 1212 in FIG. 4) of the second housing 12. The position of the speaker for multimedia playback or recording playback, the number of speakers, the position of the speaker hole corresponding to the speaker, or the number of speaker holes may be variously implemented without being limited to the illustrated example.

According to the embodiment, the third speaker may be accommodated in the first housing 11 while corresponding to a third speaker hole provided between the transparent cover 145 of the first display module 14 and the first side (e.g., the first side 1112 in FIG. 4) of the first housing 11. As another example, the third speaker hole may be provided between the transparent cover 145 and the second side (e.g., the second side 1212 in FIG. 4) of the second housing 12, and the third speaker may be accommodated in the second housing 12. In still another example, the third speaker hole may be provided between the second cover 122 and the second side (e.g., the second side 1212 in FIG. 4) of the second housing 12, and the third speaker may be accommodated in the second housing 12. The third speaker hole may be provided in a fine shape that is difficult for the user to visually recognize. The position of the telephone speaker, the number of speakers, the position of the speaker hole corresponding to the speaker, or the number of speaker holes may be variously implemented without being limited to the illustrated example.

According to various embodiments, the speaker hole may be excluded, and the sound output module may include a piezoelectric speaker.

According to various embodiments, the microphone hole and the speaker hole may be implemented as a single hole.

According to the embodiment, the one or more key input modules may include a first key input module 215 or a second key input module 216. The first key input module 215 or the second key input module 216 may include a key positioned at the first side (e.g., the first side 1112 in FIG. 4) of the first housing 11, and a key signal generating part (not illustrated separately) configured to generate a key signal in response to a press or touch on the key. The position of the key input module or the number of key input modules may be variously implemented without being limited to the illustrated example.

The one or more connection terminals (or the connector module or the interface terminal module) may include a first connection terminal 217, a second connection terminal (not illustrated separately), and/or a third connection terminal (not illustrated separately).

According to the embodiment, the first connection terminal 217 may be accommodated in the first housing 11 while corresponding to a first connector hole provided at the first side (e.g., the first side 1112 in FIG. 4) of the first housing 11. The foldable electronic device 1 may transmit and/or receive electric power and/or data to and/or from an external electronic device electrically connected to the first connector 217. For example, the first connector 217 may include a USB connector or an HDMI connector.

According to the embodiment, the second connection terminal may be accommodated in the first housing 11 while corresponding to a second connector hole provided at the first side (e.g., the first side 1112 in FIG. 4) of the first housing 11. A cover member 218 may be positioned in the second connector hole and cover the second connector hole. An external storage medium, such as a memory card (e.g., a secure digital (SD) memory card), may be connected to the second connector.

According to the embodiment, the third connection terminal may be accommodated in the second housing 12 while corresponding to a third connector hole provided at the second side (e.g., the second side 1212 in FIG. 4) of the second housing 12. A cover member 219 may be positioned in the third connector hole and cover the third connector hole. An external storage medium, such as a subscriber identity module (SIM) card or a universal SIM (USIM) card, may be connected to the third connector.

According to various embodiments, the position of the connection terminal or the number of connection terminals may be variously implemented without being limited to the illustrated example.

The foldable electronic device 1 may further include various constituent elements in accordance with the provided form. All the constituent elements cannot be enumerated because the constituent element is variously deformed in accordance with the tendency of convergence of the foldable electronic device 1. However, the foldable electronic device 1 may further additionally include a constituent element equal in level to the above-mentioned constituent elements. In various embodiments, particular constituent elements may be excluded from the constituent elements or substituted with other constituent elements in accordance with the provided form.

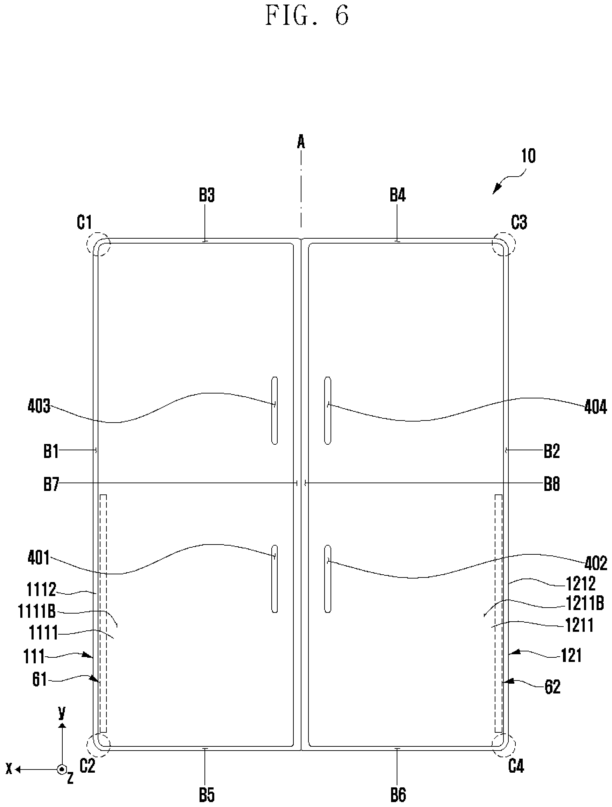

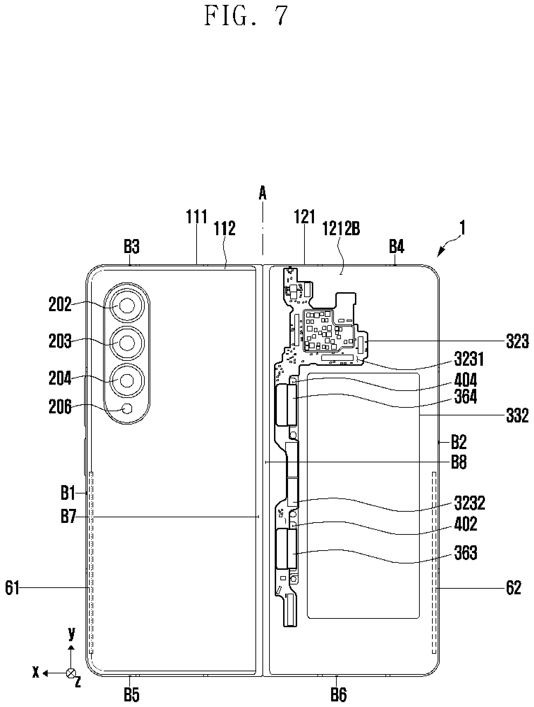

FIG. 4 is an exploded perspective view of the foldable electronic device 1 according to an embodiment of the disclosure, which may be combined with any of the preceding embodiments. FIGS. 5 and 6 are views illustrating the foldable housing 10 in the unfolded state according to an embodiment of the disclosure, which may be combined with any of the preceding embodiments. FIG. 7 is a view illustrating the foldable electronic device 1 in the unfolded state according to an embodiment of the disclosure, which may be combined with any of the preceding embodiments.

With reference to FIGS. 4, 5, 6, and 7, the foldable electronic device 1 may include any of the foldable housing 10, a first inner support body 311, a second inner support body 312, the first display module 14, the second display module 15, a first printed circuit board 321, a second printed circuit board 322, a third printed circuit board 323, a first battery 331, a second battery 332, a first speaker module 341, a second speaker module 342, a first antenna structure 351, a second antenna structure 352, a first flexible printed circuit board 361, a second flexible printed circuit board 362, a third flexible printed circuit board 363, a fourth flexible printed circuit board 364, a first magnetic element 61, and/or a second magnetic element 62.

According to the embodiment, the foldable housing 10 may include the first frame 111, the first cover 112, the second frame 121, and/or the hinge part H (see FIG. 5). The first housing 11 in FIG. 2 may include the first frame 111 and the second cover 112. The second housing 12 in FIG. 2 may include the second frame 121.

According to the embodiment, the first frame 111 may include the first support part 1111 and the first side 1112. The first frame 111 may be provided as an integrated form including the first support part 1111 and the first side 1112. The first support part 1111 may be an internal structure positioned in the foldable electronic device 1 while corresponding to the first housing 11 (see FIG. 2) and referred to as various other terms such as a 'first bracket (bracket),' a 'first support body,' a 'first support member,' or a 'first support structure'.

According to the embodiment, the second frame 121 may include the second support part 1211 and the second side 1212. The second frame 121 may be provided as an integrated form including the second support part 1211 and the second side 1212. The second support part 1211 may be an internal structure positioned in the foldable electronic device 1 while corresponding to the second housing 12 (see FIG. 2) and referred to as various other terms such as a 'second bracket,' a 'second support body,' a 'second support member,' or a 'second support structure'.

According to the embodiment, at least a part of the first frame 111 and/or at least a part of the second frame 121 may be made of a metallic material and/or a nonmetallic material (e.g., polymer).

According to the embodiment, electrical constituent elements (or electronic components) or various members related to the electrical constituent elements may be disposed on the first frame 111 or the first support part 1111 or supported by the first frame 111 or the first support part 1111. The first support part 1111 may include a first support area 1111A directed toward the first display area ① of the first display module 14, and a third support area 1111B (see FIG. 6) directed in a direction substantially opposite to the first support area 1111A. The first display area ① may be disposed in the first support area 1111A of the first support part 1111. Various constituent element, such as the first printed circuit board 321, the second printed circuit board 322, or the first battery 331, may be disposed in or coupled to the third support area 1111B.

According to the embodiment, electrical constituent elements (or electronic components) or various members related to the electrical constituent elements may be disposed on the second frame 121 or the second support part 1211 or supported by the second frame 121 or the second support part 1211. The second support part 1211 may include a second support area 1211A directed toward the second display area ② of the first display module 14, and a fourth support area 1211B (see FIG. 6) directed in a direction substantially opposite to the second support area 1211A. The second display area ② may be disposed in the second support area 1211A of the second support part 121. Various constituent elements, such as the third printed circuit board 323 or the second battery 332, may be disposed in or coupled to the fourth support area 1211B.

According to the embodiment, the first display area ① of the first display module 14 may be disposed on the first support part 1111 of the first frame 111, and the second display area ② of the first display module 14 may be disposed on the second support part 1211 of the second frame 121 by means of various adhesive materials (or bonding materials) such as a thermally reactive adhesive material (or a thermally reactive bonding material), a photoreactive adhesive material (or a photoreactive bonding material), a general adhesive agent (or a general bonding agent), and/or a double-sided tape.

According to the embodiment, the hinge part H may include the first hinge module 4A, the second hinge module 4B, the third hinge module 5, the hinge housing 13, a first plate 611, a second plate 612, a third plate 613, and/or a fourth plate 614.

According to the embodiment, the first hinge module 4A, the second hinge module 4B, and the third hinge module 5 may connect the first frame 111 and the second frame 121. The first frame 111 and the second frame 121 may be rotatably connected to each other by means of the first hinge module 4A, the second hinge module 4B, and the third hinge module 5. The first hinge module 4A, the second hinge module 4B, and the third hinge module 5 may be disposed along the centerline A of the foldable electronic device 1, and the third hinge module 5 may be positioned between the first hinge module 4A and the second hinge module 4B. In the embodiment, the third hinge module 5 may be disposed to correspond to a center between the first hinge module 4A and the second hinge module 4B (e.g., a point on the centerline A disposed at substantially the same distance from the first hinge module 4A and the second hinge module 4B).

According to the embodiment, the first frame 111 may include a first side portion 301 corresponding to the hinge part H. The first side portion 301 may include a part of the first support part 1111 included in the first frame 111. The second frame 121 may include a second side portion 302 corresponding to the hinge part H. The second side portion 302 may include a part of the second support part 1211 included in the second frame 121. The first hinge module 4A, the second hinge module 4B, and the third hinge module 5 may be coupled to the first side portion 301 and the second side portion 302.

According to the embodiment, the first hinge module 4A may include a first bracket 41A, a second bracket 42A, and/or a bracket connection part 43A. The first bracket 41A may be connected to the first side portion 301 of the first frame 111. The first bracket 41A may be disposed in or coupled to the first support area 1111A of the first frame 111 by screw-fastening. The second bracket 42A may be connected to the second side portion 302 of the second frame 121. The second bracket 42A may be disposed in or coupled to the second support area 1211A of the second frame 121 by screw-fastening. The bracket connection part 43A may connect the first bracket 41A and the second bracket 42A. The first bracket 41A and the second bracket 42A may rotate relative to the bracket connection part 43A.

According to the embodiment, the bracket connection part 43A of the first hinge module 4A may be constituted so that the first frame 111, to which the first bracket 41A is fixed, and the second frame 121, to which the second bracket 42A is fixed, may rotate at the same angle in opposite directions. The bracket connection part 43A may be constituted so that the first frame 111, to which the first bracket 41A is fixed, and the second frame 121, to which the second bracket 42A is fixed, may be rotated by at least one predetermined angle and maintained. For example, the bracket connection part 43A may have a free-stop function. The bracket connection part 43A may be constituted to provide a force that enables the first frame 111, to which the first bracket 41A is fixed, and the second frame 121, to which the second bracket 42A is fixed, to rotate relative to each other. For example, the bracket connection part 43A may include a combination of at least one shaft, at least one cam gear, and/or at least one compression spring configured to provide elasticity.

For example, the second hinge module 4B may be provided to be substantially identical to the first hinge module 4A and include a first bracket 41B, a second bracket 42B, and/or a bracket connection part 43B. In the embodiment, the second hinge module 4B may be disposed in the foldable electronic device 1 in a direction opposite to the direction in which the first hinge module 4A is disposed. The first bracket 41B of the second hinge module 4B may be connected to the second side portion 302 of the second frame 121. The first bracket 41B of the second hinge module 4B may be disposed in or coupled to the second support area 1211A of the second frame 121 by screw-fastening. The second bracket 42B of the second hinge module 4B may be connected to the first side portion 301 of the first frame 111. The second bracket 42B of the second hinge module 4B may be disposed in or coupled to the first support area 1111A of the first frame 111 by screw-fastening.

According to the embodiment, the third hinge module 5 may include a rotational motion guide or a guide rail assembly. For example, the third hinge module may include a first slider 51, a second slider 52, and a guide rail 53. The guide rail 53 may be disposed on or coupled to the hinge housing 13. The hinge housing 13 may include a recess provided in the other surface opposite to one surface exposed to the outside in the folded state (see FIG. 2) of the foldable electronic device 1, and the guide rail 53 may be disposed in the recess of the hinge housing 13 by screw-fastening. The first slider 51 may be disposed on the guide rail 53 so as to be slidable relative to the guide rail 53 and coupled to the first support part 1111 of the first frame 111 by a screw. The second slider 52 may be disposed on the guide rail 53 so as to be slidable relative to the guide rail 53 and coupled to the second support part 1211 of the second frame 121 by a screw. The guide rail 53 may include a first guide rail (e.g., a first rotational motion guide rail) in a sliding pair relationship with the first slider 51, and a second guide rail (e.g., a second rotational motion guide rail) in a sliding pair relationship with the second slider 52. The third hinge module 5 may reduce the separation between the first frame 111 and the second frame 121. The third hinge module 5 is not limited thereto, and the third hinge module 5 may be provided in various other shapes.

According to the embodiment, the first hinge module 4A, the second hinge module 4B, and the third hinge module 5 may be coupled to the hinge housing 13 by screws. The hinge housing 13 may be connected to the first frame 111 and the second frame 121 by means of the first hinge module 4A, the second hinge module 4B, and the third hinge module 5. The hinge housing 13 may include a recess provided in the other surface opposite to one surface exposed to the outside in the folded state (see FIG. 2) of the foldable electronic device 1, and the bracket connection part 43A of the first hinge module 4A, the bracket connection part 43B of the second hinge module 4B, and the third hinge module 5 may be disposed in the recess of the hinge housing 13 by screw-fastening.

According to the embodiment, the first plate 611 and the second plate 612 may be positioned to correspond to the first frame 111. The first plate 611 and the second plate 612 may be coupled to the first support part 1111 of the first frame 111 by screw-fastening. In the unfolded state (see FIG. 1) of the foldable electronic device 1, the first hinge module 4A, the second hinge module 4B, the third hinge module 5, the first plate 611, and the second plate 612 may support one side area of the third display area ③ of the first display module 14 based on the centerline A of the foldable electronic device 1. The first plate 611 may support a part of the third display area ③ of the first display module 14 that corresponds to a portion between the first hinge module 4A and the third hinge module 5. The second plate 612 may support a part of the third display area ③ of the first display module 14 that corresponds to a portion between the second hinge module 4B and the third hinge module 5.

According to the embodiment, the third plate 613 and the fourth plate 614 may be positioned to correspond to the second frame 121. The third plate 613 and the fourth plate 614 may be coupled to the second support part 1211 of the second frame 121 by screw-fastening. In the unfolded state (see FIG. 1) of the foldable electronic device 1, the first hinge module 4A, the second hinge module 4B, the third hinge module 5, the third plate 613, and the fourth plate 614 may support the other side area of the third display area ③ of the first display module 14 based on the centerline A of the foldable electronic device 1. The third plate 613 may support a part of the third display area ③ of the first display module 14 that corresponds to the portion between the first hinge module 4A and the third hinge module 5. The fourth plate 614 may support a part of the third display area ③ of the first display module 14 that corresponds to the portion between the second hinge module 4B and the third hinge module 5. In the unfolded state of the foldable electronic device 1, the third display area ③ may be maintained to be flat by being supported by the first hinge module 4A, the second hinge module 4B, the third hinge module 5, the first plate 611, and the second plate 612 even when an external force (e.g., external pressure such as a touch input made by a user's finger or a touch input made by an electronic pen) is applied to the third display area ③. In the unfolded state of the foldable electronic device 1, the first hinge module 4A, the second hinge module 4B, the third hinge module 5, the first plate 611, and the second plate 612 may prevent the third display area ③ from sagging or creasing.

According to the embodiment, a first surface (not illustrated) of the first plate 611 may include a flat surface capable of supporting the third display area ③ of the first display module 14 in the unfolded state of the foldable electronic device 1. A second surface (not illustrated) of the second plate 612 may include a flat surface capable of supporting the third display area ③ in the unfolded state of the foldable electronic device 1. A third surface (not illustrated) of the third plate 613 may include a flat surface capable of supporting the third display area ③ in the unfolded state of the foldable electronic device 1. A fourth surface (not illustrated) of the fourth plate 614 may include a flat surface capable of supporting the third display area ③ in the unfolded state of the foldable electronic device 1. The first surface of the first plate 611 and the third surface of the third plate 613 may face each other in the folded state of the foldable electronic device 1 and substantially define an angle of about 180 degrees in the unfolded state of the foldable electronic device 1. The second surface of the second plate 612 and the fourth surface of the fourth plate 614 may face each other in the folded state of the foldable electronic device 1 and substantially define an angle of about 180 degrees in the unfolded state of the foldable electronic device 1. In the unfolded state of the foldable electronic device 1, the first surface of the first plate 611, the second surface of the second plate 612, the third surface of the third plate 613, and the fourth surface of the fourth plate 614 may be disposed without a substantial height difference from a surface of the first hinge module 4A, which supports the third display area ③ of the first display module 14, a surface of the second hinge module 4B, which supports the third display area ③, and a surface of the third hinge module 5 that supports the third display area ③.

According to various embodiments, when the foldable electronic device 1 switches from the unfolded state (see FIG. 1) to the folded state (see FIG. 2), the hinge part H may be constituted to provide a space in which the third display area ③ of the first display module 14 may be disposed in a bent shape that may reduce bending stress. When the foldable electronic device 1 switches from the unfolded state to the folded state, the hinge part H may be constituted to provide a space in which the third display area ③ may be disposed in a bent shape that may reduce buckling. In the embodiment, when the foldable electronic device 1 switches from the unfolded state to the folded state, the third display area ③ may be disposed in a water droplet shape or a dumbbell shape that may reduce damage or permanent deformation.

According to the embodiment, the first side 1112 of the first frame 111 may include a first bezel B1, a third bezel B3, a fifth bezel B5, and/or a seventh bezel B7.

According to the embodiment, the first bezel B1 may extend in parallel with a direction (e.g., a y-axis direction) of the centerline A of the foldable electronic device 1. The third bezel B3 may extend from one end of the first bezel B1 in a direction perpendicular to a direction of the centerline A of the foldable electronic device 1. The fifth bezel B5 may extend from the other end of the first bezel B1 in a direction perpendicular to the direction of the centerline A of the foldable electronic device 1, and the fifth bezel B5 may be substantially parallel to the third bezel B3. The seventh bezel B7 may extend in parallel with the direction of the centerline A of the foldable electronic device 1. The seventh bezel B7 may be positioned to be spaced apart from the first bezel B1 in the direction perpendicular to the direction of the centerline A of the foldable electronic device 1, and the seventh bezel B7 may connect the third bezel B3 and the fifth bezel B5. The first cover 112 may be disposed to be surrounded by the first bezel B1, the third bezel B3, the fifth bezel B5, and the seventh bezel B7 when viewed from above the first cover 112.

According to the embodiment, a first corner C1, which connects the first bezel B1 and the third bezel B3, may be provided in a curved shape. A second corner C2, which connects the first bezel B1 and the fifth bezel B5, may be provided in a curved shape.

According to the embodiment, the seventh bezel B7 may be a part of the first side portion 301 (see FIG. 4) included in the first frame 211.

According to the embodiment, the second side 1212 of the second frame 121 may include a second bezel B2, a fourth bezel B4, a sixth bezel B6, and/or an eighth bezel B8.

According to the embodiment, the second bezel B2 may extend in parallel with the direction (e.g., the y-axis direction) of the centerline A of the foldable electronic device 1. The fourth bezel B4 may extend from one end of the second bezel B2 in the direction perpendicular to the direction of the centerline A of the foldable electronic device 1. The sixth bezel B6 may extend from the other end of the second bezel B2 in the direction perpendicular to the direction of the centerline A of the foldable electronic device 1, and the sixth bezel B6 may be substantially parallel to the fourth bezel B4. The eighth bezel B8 may extend in parallel with the direction of the centerline A of the foldable electronic device 1. The eighth bezel B8 may be positioned to be spaced apart from the second bezel B2 in the direction perpendicular to the direction of the centerline A of the foldable electronic device 1, and the eighth bezel B8 may connect the fourth bezel B4 and the sixth bezel B6. The second display module 15 may be disposed to be surrounded by the second bezel B2, the fourth bezel B4, the sixth bezel B6, and the eighth bezel B8 when viewed from above the second display module 15.

According to the embodiment, a third corner C3, which connects the second bezel B2 and the fourth bezel B4, may be provided in a curved shape. A fourth corner C4, which connects the second bezel B2 and the sixth bezel B6, may be provided in a curved shape.

According to the embodiment, the eighth bezel B8 may be a part of the second side portion 302 (see FIG. 4) included in the second frame 121.

According to the embodiment, the first bezel B1 and the second bezel B2 may be aligned in the folded state (see FIG. 2) of the foldable electronic device 1. The third bezel B3 and the fourth bezel B4 may be aligned in the folded state of the foldable electronic device 1. The fifth bezel B5 and the sixth bezel B6 may be aligned in the folded state of the foldable electronic device 1.

According to the embodiment, in the unfolded state of the foldable electronic device 1, a gap between the seventh bezel B7 of the first frame 111 and the eighth bezel B8 of the second frame 121 may be closed, and the hinge housing 13 may not be substantially exposed to the outside. In the folded state of the foldable electronic device 1, the gap between the seventh bezel B7 of the first frame 111 and the eighth bezel B8 of the second frame 121 may be opened, and the hinge housing 13 may be exposed to the outside.

According to the embodiment, the first printed circuit board 321 may be positioned to be closer to the third bezel B3 than to the fifth bezel B5 when viewed from above the first cover 112 (or when viewed from above the first display area ① of the first display module 14). In the disclosure, the above-mentioned expression 'when viewed from above the first cover 112' may be substituted with and used as the expression 'when viewed from above the first display area ①'. The second printed circuit board 322 may be positioned to be closer to the fifth bezel B5 than to the third bezel B3 when viewed from above the first cover 112. The first battery 331 may be positioned between the first printed circuit board 321 and the second printed circuit board 322 when viewed from above the first cover 112.

According to the embodiment, the third printed circuit board 323 may include a first substrate area 3231, and a second substrate area 3232 extending from the first substrate area 3231 when viewed from above the second cover 122 (or when viewed from above the second display module 15 or when viewed from above the second display area ② of the first display module 14). The first substrate area 3231 may be positioned to be closer to the fourth bezel B4 than to the sixth bezel B6 when viewed from above the second display module 25. The second substrate area 3232 may be positioned between the second battery 332 and the eighth bezel B8 when viewed from above the second display module 15. In the disclosure, the above-mentioned expression 'when viewed from above the second cover 122' may be substituted with and used as the expression 'when viewed from above the second display module 15' or the expression 'when viewed from above the second display area ②'.

According to the embodiment, the first inner support body 311 may be positioned between the first support part 1111 of the first frame 111 and the first cover 112. The first inner support body 311 may be coupled to the first support part 1111. The first inner support body 311 may cover the constituent element such as the first printed circuit board 321 disposed on the first support part 1111 of the first frame 111. At least a part of the first printed circuit board 321 may be positioned between the first support part 1111 and the second inner support body 312.

According to various embodiments, the first inner support body 311 may include a nonmetallic material, and a conductive pattern, which is used as an antenna radiator, may be disposed on the first inner support body 311.

According to the embodiment, the second inner support body 312 may be positioned between the first support part 1111 of the first frame 111 and the first cover 112. The second inner support body 312 may be coupled to the first support part 1111. The first battery 331 may be positioned between the first inner support body 311 and the second inner support body 312 when viewed from above the first cover 112 (e.g., when viewed in a +z-axis direction). The second inner support body 312 may cover the constituent element such as the second printed circuit board 322 disposed on the first support part 1111 of the first frame 111. At least a part of the second printed circuit board 322 may be positioned between the first support part 1111 and the second inner support body 312. The first frame 111 may be referred to as a 'first front casing (front casing)', and the first inner support body 311 and/or the second inner support body 312 may be referred to as a 'first rear casing (rear casing)'.

According to the embodiment, the second inner support body 312 may include a nonmetallic material, and a conductive pattern, which is used as an antenna radiator, may be disposed on the second inner support body 312. The conductive pattern, which is used as the antenna radiator, may be electrically connected to the second printed circuit board 322.

According to various embodiments, the foldable electronic device 1 may further include a third inner support body (not illustrated separately) positioned between the second support part 1211 of the second frame 121 and the second display module 15. The third inner support body may be coupled to the second support part 1211. The third inner support body may support the second display module 15 (or the rear surface of the second display module 15).

According to the embodiment, the first speaker module (or the first speaker assembly) 341 may be positioned between the second support part 1211 of the second frame 121 and the second display module 15. The first speaker module 341 may be disposed on or coupled to the second support part 1211. For example, the first speaker module 341 may include a first speaker, and a first speaker support body onto which the first speaker is disposed or coupled. The first speaker support body may provide a sound movement path (or passageway) between the first speaker and the first speaker hole 213 (see FIG. 1) provided at the second side 1212 of the second frame 121.

According to the embodiment, the second speaker module (or the second speaker assembly) 342 may be positioned between the second support part 1211 of the second frame 121 and the second display module 15. The second speaker module 342 may be disposed on or coupled to the second support part 1211. For example, the second speaker module 342 may include a second speaker, and a second speaker support body onto which the second speaker is disposed or coupled. The second speaker support body may provide a sound movement path (or passageway) between the second speaker and the second speaker hole 214 (see FIG. 2) provided at the second side 1212 of the second frame 121.

According to the embodiment, the first antenna structure 351 may be positioned between the first support part 1111 of the first frame 111 and the first cover 112. The first antenna structure 351 may be disposed on the first cover 112 or a surface of the first battery 331 directed toward the first cover 112. The position of the first antenna structure 351 may be variously implemented without being limited to the above-mentioned position. For example, the first antenna structure 351 may be implemented in the form of a film such as an FPCB. The first antenna structure 351 may include at least one conductive pattern used as a loop-type radiator. For example, at least one conductive pattern included in the first antenna structure 351 may include a planar spiral conductive pattern (e.g., a planar coil or a pattern coil). In the embodiment, at least one conductive pattern included in the first antenna structure 351 may be electrically connected to a wireless communication circuit disposed on the first printed circuit board 321. For example, at least one conductive pattern may be used for near-field wireless communication such as near-field communication (NFC). In another example, at least one conductive pattern may be used for magnetic secure transmission (MST) to transmit and/or receive magnetic signals. In various embodiments, at least one conductive pattern included in the first antenna structure 351 may be electrically connected to a power transmitting/receiving circuit disposed on the first printed circuit board 321. The power transmitting/receiving circuit may receive power from an external electronic device in a wireless manner or transmit power to the external electronic device in a wireless manner by using at least one conductive pattern. The power transmitting/receiving circuit may include a power management module. For example, the power transmitting/receiving circuit may include a power management integrated circuit (PMIC) or a charger integrated circuit (IC). The power transmitting/receiving circuit may charge the first battery 331 and/or the second battery 332 by using power received in a wireless manner by using the conductive pattern.

According to the embodiment, the second antenna structure 352 may be positioned between the first support part 1111 of the first frame 111 and the first cover 112. The second antenna structure 352 may be disposed on the first cover 112 or a surface of the first inner support body 311 directed toward the first cover 112. The position of the second antenna structure 352 may be variously implemented without being limited to the above-mentioned position. For example, the second antenna structure 352 may be implemented in the form of a film such as an FPCB. In the embodiment, a processor, which is electrically connected to the wireless communication circuit, may use the second antenna structure 352 to perform a function of measuring positions (e.g., angle of arrival (AOA)) of signal sources (e.g., a responder, a transmitter, or a transmitter (Tx) device). The processor may simultaneously perform a function of measuring an angle (AOA) and a function of measuring a distance (ranging). In the embodiment, the processor may identify (or estimate) a distance between the foldable electronic device 1 and the signal source by using at least one antenna element (e.g., the first antenna element, the second antenna element, and/or the third antenna element) included in the second antenna structure 352. In the embodiment, the processor may identify or estimate a receiving angle (e.g., a direction of a signal) of a signal with respect to a configured axis of the foldable electronic device 1 by using at least one of a difference in arrival time of a response message from a request message via at least two antenna elements included in the second antenna structure 352, a difference in reach distance between the received signals, and a phase difference. The foldable electronic device 1 may support the position measurement function by using a bandwidth of broadband (e.g., ultra-wide band (UWB)). For example, the UWB may refer to a technology that follows the international standard of IEEE 802.15.4 to perform communication with the bandwidth of broadband. In the embodiment, the processor may identify or estimate the position of the signal source (e.g., the responder, the transmitter, or the Tx device) with respect to the foldable electronic device 1 (e.g., an initiator, a receiver, or an receiver (Rx) device) by a phase difference between signals received by the plurality of antenna elements included in the second antenna structure 352. The second antenna structure 352 may be provided as a printed circuit board (e.g., a flexible printed circuit board (FPCB)). For example, the second antenna structure 352 may be a patch antenna including a plurality of patches (e.g., a first antenna element, a second antenna element, and a third antenna element).

According to the embodiment, the first flexible printed circuit board 361 may electrically connect the first printed circuit board 321 and the second printed circuit board 322.

According to the embodiment, the first flexible printed circuit board 361 may be a flexible RF cable (FRC). The second printed circuit board 322 may include an antenna radiator or be electrically connected to the antenna radiator (e.g., a conductive part included in the first side 1112 of the first frame 111). The wireless communication circuit may be disposed on the first printed circuit board 321. The wireless communication circuit may be electrically connected to the antenna radiator through the first flexible printed circuit board 361. The wireless communication circuit may transmit radiation currents (or radio signals, RF signals, or electromagnetic signals) to the antenna radiator through the first flexible printed circuit board 361. The wireless communication circuit may process signals (or RF signals) to be transmitted or received through the antenna radiator.

According to the embodiment, the second flexible printed circuit board 362 may electrically connect the first printed circuit board 321 and the second printed circuit board 322. For example, the first connection terminal 217 (see FIG. 2) disposed on the second printed circuit board 322 may be electrically connected to the first printed circuit board 321 through the second flexible printed circuit board 362.

According to the embodiment, the third flexible printed circuit board 363 and the fourth flexible printed circuit board 364 may be disposed to traverse the hinge part H. The third flexible printed circuit board 363 and the fourth flexible printed circuit board 364 may electrically connect the first printed circuit board 321, which is disposed on the first frame 111, and the third printed circuit board 323 disposed on the second frame 121.

According to the embodiment, the first support part 1111 of the first frame 111 may include a first opening (or a first hole or a first through-hole) 401. The second support part 1211 of the second frame 121 may include a second opening (or a second hole or a second through-hole) 402. The third flexible printed circuit board 363 may penetrate the first opening 401 and the second opening 402. In the embodiment, the first opening 401 and the second opening 402 may overlap and be aligned with each other in the folded state (see FIG. 2) of the foldable electronic device 1.

According to the embodiment, the first support part 1111 of the first frame 111 may include a third opening (or a third hole or a third through-hole) 403. The second support part 1221 of the second frame 121 may include a fourth opening (or a fourth hole or a fourth through-hole) 404. The fourth flexible printed circuit board 364 may penetrate the third opening 403 and the fourth opening 404. The third opening 403 and the fourth opening 404 may overlap and be aligned with each other in the folded state (see FIG. 2) of the foldable electronic device 1.

According to the embodiment, the first opening 401 and the third opening 403 may be positioned to be spaced apart from each other in the direction (e.g., the y-axis direction) of the centerline A of the foldable electronic device 1. The second opening 402 and the fourth opening 404 may be positioned to be spaced apart from each other in the direction of the centerline A of the foldable electronic device 1.

According to the embodiment, the first opening 401 may be positioned between the first battery 331 and the seventh bezel B7 when viewed from above the first cover 112. The third opening 403 may be positioned between the first printed circuit board 321 and the seventh bezel B7 when viewed from above the first cover 112.

According to the embodiment, the second opening 402 and/or the fourth opening 404 may be positioned between the second battery 332 and the eighth bezel B8 when viewed from above the second display module 15.

According to the embodiment, the first magnetic element 61 may be disposed on the first support part 1111 of the first frame 111. The first magnetic element 61 may be disposed in a first recess (not illustrated separately) provided in the first support area 1111A of the first support part 111. The first magnetic element 61 may be disposed on or coupled to the first support part 1111 by means of an adhesive material (or a bonding material).

According to various embodiments, the first magnetic element 61 may be at least partially disposed in the first support part 1111 of the first frame 111 (not illustrated separately).

According to the embodiment, the second magnetic element 62 may be disposed on the second support part 1211 of the second frame 121. The second magnetic element 62 may be disposed in a second recess (not illustrated separately) provided in the second support area 1211A of the second support part 121. The first magnetic element 62 may be disposed on or coupled to the second support part 1211 by means of an adhesive material (or a bonding material).

According to various embodiments, the second magnetic element 62 may be at least partially disposed in the second support part 1211 of the second frame 121 (not illustrated separately).

According to the embodiment, the first magnetic element 61 and the second magnetic element 62 may be aligned with and overlap each other in the folded state (see FIG. 2) of the foldable electronic device 1. An attractive force may be applied between the first magnetic element 61 and the second magnetic element 62 in the folded state of the foldable electronic device 1. The attractive force between the first magnetic element 61 and the second magnetic element 62 may reduce the separation between the first housing 11 (see FIG. 1) and the second housing 12 (see FIG. 1) in the folded state of the foldable electronic device 1.

According to the embodiment, the first magnetic element 61 may include a first magnet including magnetic dipoles including an N-pole and an S-pole. The second magnetic element 62 may include a second magnet including magnetic dipoles including an N-pole and an S-pole.

According to various embodiments, the first magnetic element 61 may include a magnet, and the second magnetic element 62 may include a material that may be magnetized by reacting with the magnet of the first magnetic element 61 in the folded state of the foldable electronic device 1. In various embodiments, the second frame 121 may be implemented to include a part corresponding to the second magnetic element 62. In this case, the second magnetic element 62 may be excluded.

According to various embodiments, the second magnetic element 62 may include a magnet, and the first magnetic element 61 may include a material that may be magnetized by reacting with the magnet of the second magnetic element 62 in the folded state of the foldable electronic device 1. In various embodiments, the first frame 111 may be implemented to include a part corresponding to the first magnetic element 61. In this case, the first magnetic element 61 may be excluded.

According to the embodiment, the first magnetic element 61 may be positioned to be closer to the first bezel B1 of the first frame 111 than to the seventh bezel B7 of the first frame 111. The second magnetic element 62 may be positioned to be closer to the second bezel B2 of the second frame 121 than to the eighth bezel B8 of the second frame 121.

According to the embodiment, the second magnetic element 62 may be at least partially between the second battery 332 and the second bezel B2 when viewed from above the second display module 15.

According to the embodiment, the first display module 14 includes the display drive circuit 41, an extension part 42, and/or a fifth flexible printed circuit board 43.

According to the embodiment, the display drive circuit 41 may serve as a passageway for a signal between the flexible display 140 and the processor disposed on the first printed circuit board 321. The display drive circuit 41 may control the pixels by means of the TFTs included in the flexible display 140.

According to the embodiment, the display drive circuit 41 may serve to implement color differences by adjusting the amount of RGB (red, green, blue) signals of the pixels.

According to various embodiments, the display drive circuit 41 may be constituted to operate in response to an RGBW (red, green, blue, white) method made by adding a white pixel to the RGB pixel.

According to the embodiment, the display drive circuit 41 may include a display drive integrated circuit (DDI) or a DDI chip, for example.

According to various embodiments, the display drive circuit 41 may be a DDI package. The display drive circuit 41 may include a DDI (or a DDI chip), a timing controller (T-CON), a graphic RAM, or a power drive part (power penetrating circuits). In various embodiments, the graphic RAM may be excluded or implemented as a memory provided separately from the display drive circuit 41. The timing controller may convert a data signal, which is inputted from the processor, into a signal required for the DDI. The timing controller may adjust input data information to a signal suitable for a gate driver (or a gate IC) and a source driver (or a source IC) of the DDI. The graphic RAM may serve as a memory configured to temporarily store data inputted to the driver (or IC) of the DDI. The graphic RAM may store the inputted signal and transmit the signal to the driver of the DDI again. In this case, the graphic RAM may process the signal by interacting with the timing controller. The power drive part may generate a voltage for operating the flexible display 140 and provide the voltage required for the gate driver and the source driver of the DDI.

According to the embodiment, the extension part 42 may extend from the flexible display 140 (see FIG. 3) or be connected to the flexible display 140 (see FIG. 3). The extension part 42 may include electrical paths (e.g., lines implemented as conductive patterns) that electrically connect the flexible display 140 (see FIG. 3) and the fifth flexible printed circuit board 43.

According to the embodiment, the extension part 42 may extend from the second display area ② of the first display module 14 or be connected to the second display area ②.

According to the embodiment, the extension part 42 may include a first portion 421 and a second portion 422. The first portion 421 may be disposed on or coupled to the rear surface of the second display area ② included in the first display module 14. The second portion 422 may extend while being bent toward the first portion 421 from the second display area ② of the first display module 14, such that the second portion 422 may be disposed in a bent shape.

According to the embodiment, the display drive circuit 41 may be disposed on the first portion 421 of the extension part 42.

According to the embodiment, the fifth flexible printed circuit board 43 may electrically connect the extension part 42 and the third printed circuit board 323. One end of the fifth flexible printed circuit board 43 may be electrically connected to the extension part 42. The other end of the fifth flexible printed circuit board 43 may include a connector 43a to be electrically connected to the third printed circuit board 323. A signal instructed by the processor disposed on the first printed circuit board 321 may be transmitted to the display drive circuit 41 through the fifth flexible printed circuit board 43.

According to the embodiment, the fifth flexible printed circuit board 43 may penetrate an opening (not illustrated separately) provided in the second support part 1211 of the second frame 121. The connector 43a of the fifth flexible printed circuit board 43 may be electrically connected to the third printed circuit board 323 disposed in the fourth support area 1211B (see FIG. 6) of the second support part 121.

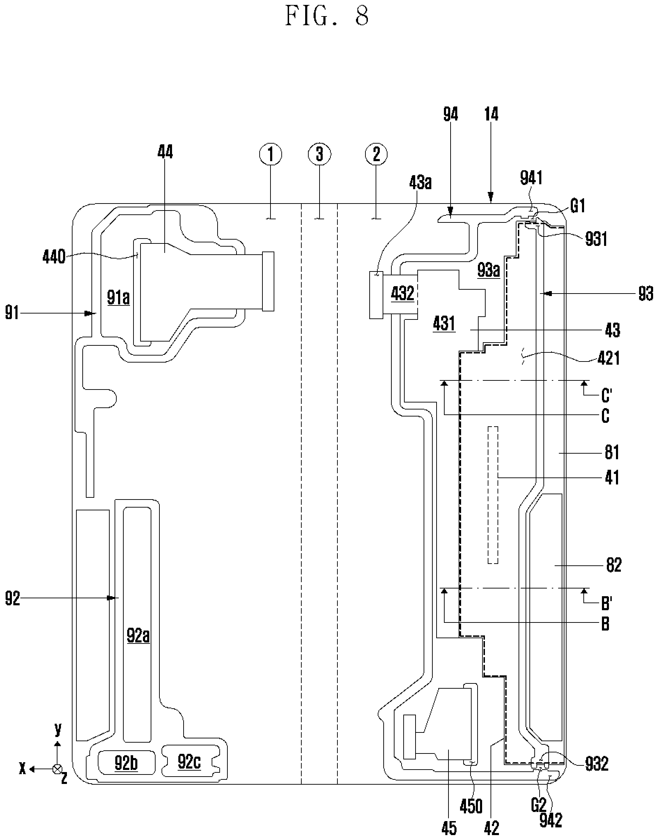

FIG. 8 is a view illustrating the first display module 14 including an adhesive part disposed between a conductive sheet 81 and the foldable housing 10 according to an embodiment of the disclosure, which may be combined with any of the preceding embodiments. In a specific example, Fig. 8 illustrates the first display module 14, a first adhesive part (or a first bonding part) 91, a second adhesive part (or a second bonding part) 92, a third adhesive part (or a third bonding part) 93, and a fourth adhesive part (or a fourth bonding part) 94 according to the embodiment of the disclosure.

With reference to FIG. 8, the foldable electronic device includes the conductive sheet 81 disposed between the first portion 421 and the foldable housing 10 and coupled to the first portion 421. Specifically, as an example, the first display module 14 may include any of the first display area ①, the second display area ②, the third display area ③, the display drive circuit 41, the extension part 42, the fifth flexible printed circuit board 43, a sixth flexible printed circuit board 44, a seventh flexible printed circuit board 45, a conductive sheet 81, and/or a film 82.

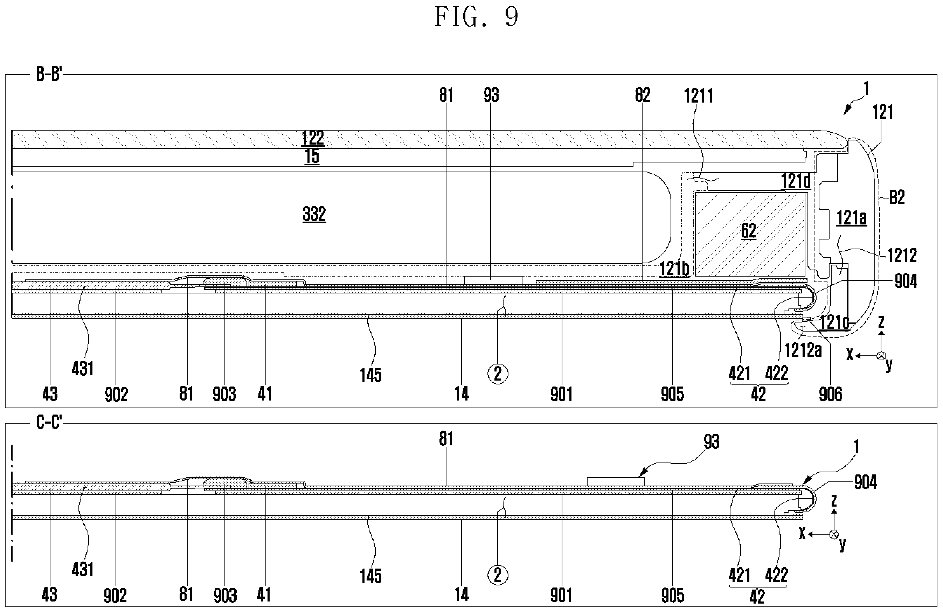

According to the embodiment, the extension part 42 may extend from the second display area ② or be connected to the second display area ②. The first portion 421 of the extension part 42 may be disposed on or coupled to the rear surface of the second display area ②. The rear surface of the second display area ② may be substantially directed in a direction opposite to the second front surface area of the foldable electronic device 1 (see FIG. 1). The second portion 422 (see FIG. 9) of the extension part 42 may extend while being bent toward the first portion 421 from the second display area ②, such that the second portion 422 may be disposed in a bent shape.

According to the embodiment, the display drive circuit 41 may be disposed on the first portion 421 of the extension part 42.

According to the embodiment, the fifth flexible printed circuit board 43 may be electrically connected to the extension part 42. The fifth flexible printed circuit board 43 may include a third portion 431 and a fourth portion 432. The third portion 431 may be electrically connected to the extension part 42. The third portion 431 may be disposed on or coupled to the rear surface of the second display area ② of the first display module 14. The fourth portion 432 may extend from the third portion 431 and include the connector 43a. The fourth portion 432 may penetrate an opening (not illustrated separately) provided in the second support part 1211 of the second frame 121. The connector 43a of the fourth portion 432 may be electrically connected to the third printed circuit board 323 disposed in the fourth support area 1211B (see FIG. 6) of the second support part 121.

According to the embodiment, the sixth flexible printed circuit board 44 may be positioned to correspond to an opening 440 provided in the rear surface of the first display area ① of the first display module 14. A constituent element, such as a sensor disposed on or included in the first display module 14, may be electrically connected to the first printed circuit board 321 (see FIG. 4) disposed in the third support area 1111B (see FIG. 6) of the first frame 111 through the sixth flexible printed circuit board 44. The sixth flexible printed circuit board 44 may penetrate an opening (not illustrated separately) provided in the first support part 1111 (see FIG. 5) of the first frame 111.

According to the embodiment, the seventh flexible printed circuit board 45 may be positioned to correspond to an opening 450 provided in the rear surface of the second display area ② of the first display module 14. A constituent element, such as a sensor disposed on or included in the first display module 14, may be electrically connected to the third printed circuit board 323 (see FIG. 4) disposed in the fourth support area 1211B (see FIG. 6) of the second frame 121 through the seventh flexible printed circuit board 45. The seventh flexible printed circuit board 45 may penetrate an opening (not illustrated separately) provided in the second support part 1211 (see FIG. 5) of the second frame 121.

According to the embodiment, the conductive sheet 81 may cover at least a part of the extension part 42. The conductive sheet 81 may overlap the extension part 42 when viewed from above the rear surface of the second display area ②. At least a part of the extension part 42 may be disposed between the second display area ② and the conductive sheet 81.

According to the embodiment, the display drive circuit 41 may be positioned between the conductive sheet 81 and the first portion 421 of the extension part 42.

According to the embodiment, the conductive sheet 81 may be coupled to the extension part 42 by means of an adhesive material (or a bonding material) (not illustrated separately) disposed between the conductive sheet 81 and the extension part 42.

According to various embodiments, a surface of the conductive sheet 81, which faces the extension part 42, may be provided as an adhesive surface including an adhesive material.

According to the embodiment, the conductive sheet 81 may reduce electromagnetic interference (EMI) related to the display drive circuit 41 and the extension part 42. The conductive sheet 81 may absorb or block noise from the outside of the first display module 14. The conductive sheet 81 may reduce an electromagnetic influence of noise applied to the display drive circuit 41 from the outside of the first display module 14. The conductive sheet 81 may reduce an electromagnetic influence of noise applied to the electrical paths (e.g., the lines implemented as the conductive patterns) included in the extension part 42 from the outside of the first display module 14.

According to the embodiment, the conductive sheet 81 may reduce an influence of static electricity applied to the display drive circuit 41 or the electrical paths included in the extension part 42. The conductive sheet 81 may absorb or block static electricity.

According to various embodiments, the conductive sheet 81 may be referred to as various other terms such as a 'blocking sheet,' a 'blocking layer,' an 'absorbing sheet,' or an 'absorbing layer'.

According to the embodiment, the display drive circuit 41 and at least a part of the extension part 42 may be disposed between the conductive sheet 81 and an electromagnetic blocking layer (or an electromagnetic absorbing layer) of the flexible display 140 (see FIG. 3). The electromagnetic blocking layer (or the electromagnetic absorbing layer) of the flexible display 140 may include the copper sheet 143e (see FIG. 3). In case that the first display module 14 includes the support sheet 147, the electromagnetic blocking layer (or the electromagnetic absorbing layer) may further include the support sheet 147. The display drive circuit 41 and at least a part of the extension part 42 may be disposed to be at least partially surrounded by a combination of the conductive sheet 81 and the electromagnetic blocking layer (or the electromagnetic absorbing layer) of the flexible display 140. The combination of the conductive sheet 81 and the electromagnetic blocking layer of the flexible display 140 may provide a blocking body (or a blocking structure) capable of reducing electromagnetic interference related to the display drive circuit 41 and the extension part 42.

According to various embodiments, the conductive sheet 81 may be expanded to cover at least a part of the third portion 431 of the fifth flexible printed circuit board 43 when viewed from above the rear surface of the second display area ②.

According to the embodiment, the conductive sheet 81 may be electrically connected to a ground area (e.g., a ground plane) (not illustrated separately) included in the fifth flexible printed circuit board 43.

According to the embodiment, a portion (hereinafter, referred to as an 'overlap portion') where the conductive sheet 81 and the third portion 431 of the fifth flexible printed circuit board 43 overlap each other may be provided when viewed from above the rear surface of the second display area ②. The overlap portion may include a conductive adhesive material (or a conductive bonding material) (not illustrated separately) disposed between the conductive sheet 81 and the third portion 431 of the fifth flexible printed circuit board 43. The conductive sheet 81 may be electrically connected to the ground area of the fifth flexible printed circuit board 43 by means of a conductive adhesive material.

According to various embodiments, a combination of the electromagnetic blocking layer (or the electromagnetic absorbing layer) (e.g., the copper sheet 143e in FIG. 3), which is included in the flexible display 140, the ground area, which is included in the fifth flexible printed circuit board 43, and the conductive sheet 81 may be defined or interpreted as a 'ground structure' for reducing electromagnetic interference in the first display module 14.

According to the embodiment, the film 82 may be disposed on the conductive sheet 81. The film 82 may overlap the conductive sheet 81 when viewed from above the rear surface of the second display area ②. The film 82 may be disposed on or coupled to the conductive sheet 81 by means of an adhesive material (or a bonding material) disposed between the conductive sheet 81 and the film 82.

According to the embodiment, the film 82 may include a non-electrically conductive material (e.g., polymer). The film 82 may include PET, but the disclosure is not limited thereto.

According to the embodiment, the film 82 may overlap the second magnetic element 62 (see FIGS. 5, 6, and 7) when viewed from above the second front surface area provided by the second display area ② in the foldable electronic device 1 (see FIG. 1). The film 82 may be disposed between the first portion 421 of the extension part 42 and the second magnetic element 62 (see FIGS. 5, 6, and 7).

During a process of assembling the constituent elements of the foldable electronic device 1, external metal foreign substances (e.g., metal particles) are sometimes positioned inadvertently between the second magnetic element 62 and the film 82 because of a magnetic force of the second magnetic element 62. The film 82 according to the embodiment may reduce or prevent damage to the first portion 421 of the extension part 42 caused by pressed external metal foreign substances. The film 82 according to the embodiment may reduce or prevent damage to the second display area ② of the first display module 14 caused by pressed external metal foreign substances.

According to the embodiment, the first display area ① may be disposed on or coupled to the first support part 1111 (see FIG. 5) of the first frame 111 by means of the first adhesive part (or the first bonding part) 91 and the second adhesive part (or the second adhesive part) 92. The first adhesive part 91 and the second adhesive part 92 may couple the rear surface of the first display area ① and the first support area 1111A (see FIG. 5) of the first support part 1111.

According to the embodiment, the first adhesive part 91 may surround the opening 440 of the first display module 14, which corresponds to the sixth flexible printed circuit board 44, when viewed from above the rear surface of the first display area ①. The rear surface of the first display area ① may be substantially directed in a direction opposite to the first front surface area of the foldable electronic device 1 (see FIG. 1). The first adhesive part 91 may reduce or prevent the introduction of external foreign substances such as moisture into a first waterproof area 91a surrounded by the first adhesive part 91 in the space between the first display area ① of the first display module 14 and the first support area 1111A (see FIG. 5) of the first frame 111. In various embodiments, the first adhesive part 91 may be referred to as a 'first waterproof part,' a 'first waterproof member,' a 'first seal,' or a 'first seal member'.

According to the embodiment, the second adhesive part 92 may reduce or prevent the introduction of external foreign substances such as moisture into a plurality of second waterproof areas 92a, 92b, and 92c surrounded by the second adhesive part 92 in the space between the first display area ① of the first display module 14 and the first support area 1111A (see FIG. 5) of the first frame 111. In various embodiments, the second adhesive part 92 may be referred to as a 'second waterproof part,' a 'second waterproof member,' a 'second seal,' or a 'second seal member'.

According to various embodiments, an integrated adhesive part may be provided to be substituted for the first adhesive part 91 and the second adhesive part 92.

According to the embodiment, the second display area ② of the first display module 14 may be disposed on or coupled to the second support part 1211 (see FIG. 5) of the second frame 121 by means of the third adhesive part (or the third bonding part) 93 and the fourth adhesive part (or the fourth adhesive part) 94.

According to the embodiment, the third adhesive part 93 may extend from a first end 931 to a second end 932. The first end 931 may be positioned to correspond to the third corner C3 (see FIG. 5) of the second frame 121 when viewed from above the rear surface of the second display area ②. The second end 932 may be positioned to correspond to the fourth corner C4 (see FIG. 5) of the second frame 121 when viewed from above the rear surface of the second display area ②.

According to the embodiment, the third adhesive part 93 may be positioned to be closer to the second bezel B2 (see FIG. 5) of the second frame 121 than to the eighth bezel B8 (see FIG. 5) of the second frame 121 when viewed from above the rear surface of the second display area ②.

According to the embodiment, the third adhesive part 93 may overlap the extension part 42 when viewed from above the rear surface of the second display area ②. An area of the extension part 42, which overlaps the third adhesive part 93, may be disposed between the rear surface of the second display area ② and the third adhesive part 93 when viewed from above the rear surface of the second display area ②.

According to the embodiment, the fourth adhesive part 94 may couple the rear surface of the second display area ② and the second support area 1211A (see FIG. 5) of the second support part 1211.

According to the embodiment, the fourth adhesive part 94 may extend from a third end 941 to a fourth end 942. The third end 941 may be positioned to correspond to the third corner C3 (see FIG. 5) of the second frame 121 when viewed from above the rear surface of the second display area ②. The fourth end 942 may be positioned to correspond to the fourth corner C4 (see FIG. 5) of the second frame 121 when viewed from above the rear surface of the second display area ②. The first end 931 of the third adhesive part 93 and the third end 941 of the fourth adhesive part 94 may be positioned to be adjacent to and spaced apart from each other when viewed from above the rear surface of the second display area ②. A first gap G1 may be provided between the first end 931 of the third adhesive part 93 and the third end 941 of the fourth adhesive part 94 when viewed from above the rear surface of the second display area ②. The second end 932 of the third adhesive part 93 and the fourth end 942 of the fourth adhesive part 94 may be positioned to be adjacent to and spaced apart from each other when viewed from above the rear surface of the second display area ②. A second gap G2 may be provided between the second end 932 of the third adhesive part 93 and the fourth end 942 of the fourth adhesive part 94 when viewed from above the rear surface of the second display area ②.

According to the embodiment, the second frame 121 (see FIG. 5) may include a first hole (not illustrated separately) aligned with or overlapping the first gap G1, and a second hole (not illustrated separately) aligned with or overlapping the second gap G2. A fifth adhesive part (not illustrated separately) may be disposed in the first hole, and a sixth adhesive part (not illustrated separately) may be disposed in the second hole. For example, the fifth adhesive part may be formed by filling the first hole with an adhesive material (e.g., liquid gaskets (cured-in place gaskets (CIPG))) and then curing the applied adhesive material (e.g., curing the applied adhesive material by a photoreaction or a thermal reaction). For example, the sixth adhesive part may be formed by filling the second hole with an adhesive material (e.g., liquid gaskets (CIPG)) and then curing the applied adhesive material (e.g., curing the applied adhesive material by a photoreaction or a thermal reaction). A combination of the third adhesive part 93, the fourth adhesive part 94, the fifth adhesive part, and the sixth adhesive part may reduce or prevent the introduction of external foreign substances such as moisture into the third waterproof area 93a surrounded by the combination in the space between the second display area ② of the first display module 14 and the second support area 1211A (see FIG. 5) of the second frame 121. In various embodiments, the combination of the third adhesive part 93, the fourth adhesive part 94, the fifth adhesive part, and the sixth adhesive part may be referred to as a 'third waterproof part,' a 'third waterproof member,' a 'third seal,' or a 'third seal member'.

According to the embodiment, the display drive circuit 41 and a part of the first portion 421 of the extension part 42, on which the display drive circuit 41 is disposed, may be positioned in the third waterproof area 93a.

According to the embodiment, the third portion 431 of the fifth flexible printed circuit board 43 may be positioned to correspond to the third waterproof area 93a. The opening of the second support part 1211 (see FIG. 5) of the second frame 121, which is penetrated by the fourth portion 432 of the fifth flexible printed circuit board 43, may be positioned to correspond to the third waterproof area 93a.

According to the embodiment, the opening 450 of the first display module 14, which corresponds to the seventh flexible printed circuit board 45, may be positioned to correspond to the third waterproof area 93a.

According to the embodiment, the first adhesive part (or the first bonding part) 91, the second adhesive part (or the second bonding part) 92, the third adhesive part (or the third bonding part) 93, or the fourth adhesive part (or the fourth bonding part) 94 may include a material such as a thermally reactive adhesive material (or a thermally reactive bonding material), a photoreactive adhesive material (or a photoreactive bonding material), a general adhesive agent (or a general bonding agent), or a double-sided tape.

According to various embodiments, the first adhesive part (or the first bonding part) 91, the second adhesive part (or the second bonding part) 92, the third adhesive part (or the third bonding part) 93, or the fourth adhesive part (or the fourth bonding part) 94 may include various polymers such as triazine thiol, dithiodipyridine, or silane-based compound or an organic adhesive material (or an organic material bonding material) such as sealant.

According to the embodiment, the film 82 may be positioned between the third adhesive part 93 and the second portion 422 (see FIG. 9) of the extension part 42, which is disposed in a bent shape, when viewed from above the rear surface of the second display area ②.

FIG. 9 is a cross-sectional view taken along line B-B' in FIG. 8 and illustrating the foldable electronic device 1 and a cross-sectional view taken along line C-C' in FIG. 8 and illustrating the first display module 14 and the third adhesive part 93 according to an embodiment of the disclosure, which may be combined with any of the preceding embodiments.

With reference to FIG. 9, the foldable electronic device 1 may include the second frame 121, the second cover 122, the first display module 14, the second display module 15, the second battery 332, and/or the second magnetic element 62.

According to the embodiment, the second frame 121 may include the second support part 1211 and the second side 1212. The second frame 121 may be provided as an integrated form including the second support part 1211 and the second side 1212. The second frame 121 may be provided as a combination of a conductive structure including conductive parts 121a and 121b and a non-conductive structure including non-conductive parts 121c and 121d.

According to the embodiment, the first display module 14 may include the second display area ②, the display drive circuit 41, the extension part 42, the fifth flexible printed circuit board 43, the conductive sheet 81, the film 82, the third adhesive part 93, a first adhesive layer (or a first bonding layer) 901, a second adhesive layer (or a second bonding layer) 902, and/or a cover layer 904.

According to the embodiment, the second display area ② may be disposed on the second support part 1211 of the second frame 121.

According to the embodiment, the display drive circuit 41 may be disposed on the extension part 42. The display drive circuit 41 may be positioned between the second display area ② and the second support part 1211 of the second frame 121. The extension part 42 may include the electrical paths (e.g., the lines implemented as the conductive patterns) that electrically connect the flexible display 140 (see FIG. 3) and the fifth flexible printed circuit board 43.

According to the embodiment, the components may be disposed on the first display module 14 in a chip-on-panel (COP) manner or a chip-on-film (COF) manner. According to the COP manner, the extension part 42 may extend from the display panel 141 included in the flexible display 140, and the display drive circuit 41 may be disposed on the extension part 42. According to the COF manner, the extension part 42 may be a separate flexible film substrate configured to electrically connect the fifth flexible printed circuit board 43 and the display panel 141 included in the flexible display 140, and the display drive circuit 41 may be disposed on the extension part 42.

According to the embodiment, the extension part 42 or the electrical paths included in the extension part 42 may be provided by the TFT film 141b (see FIG. 3) provided based on LTPS, LTPO, or a-Si, for example. In various embodiments, the extension part 42 may be interpreted as a part of the TFT film 141b (see FIG. 3).

According to the embodiment, the extension part 42 may not include the pixel. The light-emitting layer 141a (see FIG. 3) and the encapsulation layer 141c (see FIG. 3) may not be expanded to the extension part 42. In various embodiments, the TFT film 141b (see FIG. 3) may be expanded to the extension part 42, but the extension part 42 may be implemented so as not to include the TFT.

According to various embodiments, the light-emitting layer 141a (see FIG. 3) may be expanded to the extension part 42, but the extension part 42 may be implemented so as not to substantially have the plurality of pixels. In various embodiments, the encapsulation layer 141c (see FIG. 3) may be expanded to the extension part 42.

According to the embodiment, the extension part 42 may include the first portion 421 and the second portion 422. The first portion 421 may be positioned between the second display area ② and the second support part 1211. The first portion 421 may be disposed in or coupled to the second display area ②. The second portion 422 may extend while being bent toward the first portion 421 from the second display area ②, such that the second portion 422 may be disposed in a bent shape.

According to the embodiment, the display drive circuit 41 may be disposed on the first portion 421 of the extension part 42. The display drive circuit 41 may be positioned between the first portion 421 of the extension part 42 and the second support part 1211 of the second frame 121.

According to the embodiment, the display drive circuit 41 may be disposed on the first portion 421 of the extension part 42 by tape-automated bonding (TAB).

According to the embodiment, the second portion 422 of the extension part 42 may be positioned to correspond to the second bezel B2 of the second frame 121. The second bezel B2 may provide a recess capable of accommodating the second portion 422 of the extension part 42.

According to the embodiment, the first adhesive layer (or the first bonding layer) 901 may be disposed between the second display area ② and the first portion 421 of the extension part 42. The first portion 421 may be coupled to the second display area ② by means of the first adhesive layer (or the first bonding layer) 901. For example, the first adhesive layer (or the first bonding layer) 901 may include various polymers such as triazine thiol, dithiodipyridine, or silane-based compound or an organic adhesive material (or an organic material bonding material) such as sealant.

According to the embodiment, the second side 1212 of the second frame 121 may include a rim cover portion 1212a configured to cover a rim area of the second display area ② when viewed from above the second display area ②. The rim area of the second display area ② may not substantially include the pixel. A seventh adhesive part (or a seventh bonding part) 906 may be disposed between the rim area of the second display area ② and the rim cover portion 1212a of the second frame 121. The rim area of the second display area ② and the rim cover portion 1212a of the second frame 121 may be coupled by means of the seventh adhesive part (or the seventh bonding part) 906. For example, the seventh adhesive part (or the seventh bonding part) 906 may be disposed between the transparent cover 145 of the first display module 14 and the rim cover portion 1212a of the second frame 121. The seventh adhesive part (or the seventh bonding part) 906 may reduce or prevent the introduction of foreign substances such as moisture or dust into the internal space of the foldable electronic device 1 through the portion between the rim area of the second display area ② and the rim cover portion 1212a of the second frame 121.

According to various embodiments, a flexible member, such as rubber or brushes, may be provided by being substituted for the seventh adhesive part (or the seventh bonding part) 906. In various embodiments, a porous member, such as sponge, may be provided by being substituted for the seventh adhesive part (or the seventh bonding part) 906.

According to the embodiment, the cover layer 904 may be disposed on or coupled to the extension part 42. The cover layer 904 may protect the extension part 42. The cover layer 904 may reinforce the rigidity of the extension part 42 or improve the durability of the extension part 42. In case that external impact is applied to the foldable electronic device 1 because of a fall of the foldable electronic device 1 or the like, the cover layer 904 may reduce damage to the extension part 42 caused by the external impact. The cover layer 904 may prevent the extension part 42 and the second bezel B2 from directly colliding with each other because of external impact. The cover layer 904 may include a buffer material capable of reducing or absorbing external impact.

According to the embodiment, the cover layer 904 may include a non-electrically conductive material (e.g., polymer). The cover layer 904 may include PET, but the disclosure is not limited thereto.

According to various embodiments, the cover layer 904 may be provided as a coating layer disposed on the extension part 42.

According to the embodiment, the second portion 422 of the extension part 42 may have a radius of curvature that may reduce damage caused by bending stress. For example, the second portion 422 may be bent to have a radius of curvature that is minimized while reducing bending stress. The minimized radius of curvature of the second portion 422 may contribute to making the first display module 14 slim.

According to various embodiments, the first display module 14 may further include a first spacer 905 disposed between the first portion 421 of the extension part 42 and the rear surface of the second display area ②. The spacer 905 may increase a height, by which the first portion 421 of the extension part 42 is spaced apart from the second display area ②, in order to reduce a degree to which the second portion 422 of the extension part 42 is disposed to have a radius of curvature equal to or smaller than the corresponding radius of curvature (e.g., have a critical radius of curvature that causes damage to the second portion 422).

According to the embodiment, the spacer 905 may be at least partially disposed between the conductive sheet 81 and the first adhesive layer (or the first bonding layer) 901. In various embodiments, the spacer 905 of the first display module 14 may be disposed at various other positions between the first portion 421 of the extension part 42 and the rear surface of the second display area ② (not illustrated separately). In various embodiments, although not illustrated separately, the spacer 905 may be disposed in the second display area ② and interpreted as a part of the second display area ②.

According to the embodiment, the extension part 42 may be electrically connected to the fifth flexible printed circuit board 43.

According to the embodiment, a junction portion 903 where the extension part 42 and the third portion 431 of the fifth flexible printed circuit board 43 are connected may be connected by anisotropic conductive film bonding (ACF bonding). The ACF may be an anisotropic conductive film formed by making a film state by mixing fine conductive particles (e.g., Ni, carbon, or solder balls) with adhesive resin (or bonding resin) (e.g., thermosetting resin) so that electricity is applied only in one direction. When the ACF is compressed by applying heat and pressure after the ACF is disposed between the extension part 42 and the third portion 431 of the fifth flexible printed circuit board 43, a conductive pattern (not illustrated) provided on the extension part 42 may be electrically connected to a conductive pattern provided on the third portion 431 of the fifth flexible printed circuit board 43 through conductive particles, and the adhesive resin (or the bonding resin) may connect the extension part 42 and the third portion 431 of the fifth flexible printed circuit board 43.

According to the embodiment, the third portion 431 of the fifth flexible printed circuit board 43 may be positioned between the second display area ② and the second support part 1211 of the second frame 121.

According to the embodiment, the second adhesive layer (or the second bonding layer) 902 may be disposed between the second display area ② and the third portion 431 of the fifth flexible printed circuit board 43. The third portion 431 may be coupled to the second display area ② by means of the second adhesive layer (or the second bonding layer) 902. For example, the second adhesive layer (or the second bonding layer) 901 may include various polymers such as triazine thiol, dithiodipyridine, or silane-based compound or an organic adhesive material (or an organic material bonding material) such as sealant.

According to various embodiments, the display drive circuit 41 may include a TDDI (touch display driver IC). A touch sensor IC (an integrated circuit) may be disposed on the fifth flexible printed circuit board 43. The touch sensor may be electrically connected to a touch detection circuit included in the flexible display 140 (see FIG. 3).

According to the embodiment, the conductive sheet 81 may be at least partially between the second display area ② and the second support part 1211 of the second frame 121. The conductive sheet 81 may overlap the display drive circuit 41, the extension part 42, and/or the fifth flexible printed circuit board 43 when viewed from above the second cover 122. The display drive circuit 41 may be disposed between the first portion 421 of the extension part 42 and the conductive sheet 81. The first portion 421 of the extension part 42 may be at least partially disposed between the conductive sheet 81 and the second display area ②. The third portion 431 of the fifth flexible printed circuit board 43 may be disposed between the conductive sheet 81 and the second display area ②.

According to the embodiment, the junction portion 903 where the extension part 42 and the third portion 431 of the fifth flexible printed circuit board 43 are connected may be disposed between the conductive sheet 81 and the second display area ②.

According to the embodiment, the film 82 may be at least partially between the conductive sheet 81 and the second support part 1211 of the second frame 121. The film 82 may be disposed on or coupled to the conductive sheet 81 by means of an adhesive material (or a bonding material) (not illustrated separately).

According to the embodiment, the third adhesive part 93 may be at least partially disposed between the conductive sheet 81 and the second support part 1211 of the second frame 121.

According to the embodiment, the film 82 may not substantially overlap the third adhesive part 93 when viewed from above the second cover 122.

According to the embodiment, the film 82 may be positioned between the third adhesive part 93 and the second portion 422 of the extension part 42 when viewed from above the second cover 122.

According to the embodiment, the second display module 15 may be positioned between the second cover 122 and the second support part 1211 of the second frame 121. The second display module 15 may be coupled to the second cover 122 by means of an optically transparent adhesive material (or an optically transparent bonding material).

According to the embodiment, the second battery 332 may be disposed on the second support part 1211 of the second frame 121. The second battery 332 may be disposed in a recess provided in the second support part 1211. The second battery 332 may be at least partially disposed between the second display module 15 and the second support part 1211.

According to the embodiment, the second magnetic element 62 may be disposed on the second support part 1211 of the second frame 121. The second magnetic element 62 may be disposed on or coupled to the second support part 1211 by means of an adhesive material (or a bonding material). The second magnetic element 62 may be disposed in a recess provided in the second support part 1211.

According to various embodiments, the second magnetic element 62 may be at least partially disposed in the second support part 1211. In this case, a part (not illustrated separately) of the second support part 1211, which is disposed between the second display area ② and the second magnetic element 62, may include a material (e.g., non-magnetizable material) that does not substantially affect the deterioration in magnetic force of the second magnetic element 62.

According to the embodiment, the film 82 may overlap the second magnetic element 62 when viewed from above the second cover 122. During a process of assembling the constituent elements of the foldable electronic device 1, external metal foreign substances are sometimes positioned inadvertently between the second magnetic element 62 and the film 82 because of a magnetic force of the second magnetic element 62. The film 82 according to the embodiment may reduce or prevent damage to the first portion 421 of the extension part 42 caused by pressed external metal foreign substances. The film 82 according to the embodiment may reduce or prevent damage to the second display area ② caused by pressed external metal foreign substances.

According to the embodiment, a part of the cover layer 904 may be disposed between the conductive sheet 81 and the first portion 421 of the extension part 42. A part of the cover layer 904, which is disposed between the conductive sheet 81 and the first portion 421 of the extension part 42, may overlap the second magnetic element 62 when viewed from above the second cover 122.

According to various embodiments, because of a part of the cover layer 904 disposed between the conductive sheet 81 and the first portion 421 of the extension part 42, the surface area of the conductive sheet 81, on which the film 82 is disposed, may be disposed so as not to be flat, and the film 82 disposed on the surface area may be disposed so as not to be flat. However, the disclosure is not limited thereto. An additional spacer (not illustrated separately) may be interposed, such that the surface area and the film 82 may be disposed to be substantially flat.

According to various embodiments, the film 82 may not be expanded to an area corresponding to a part of the cover layer 904 disposed between the conductive sheet 81 and the first portion 421 of the extension part 42. The film 82 may be disposed to be substantially flat. A part of the cover layer 904, which is disposed between the conductive sheet 81 and the first portion 421 of the extension part 42, together with the film 82, may reduce or prevent damage to the first portion 421 of the extension part 42 or the second display area ② caused by pressed external metal foreign substances inadvertently introduced by the magnetic force of the second magnetic element 62.

According to the embodiment, when viewed from above the second cover 122, the portion of the second support part 1211 of the second frame 121, which is disposed between the third adhesive part 93 and the second bezel B2, may include an arrangement area (not illustrated separately) in which the second magnetic element 62 is disposed, and a non-arrangement area (not illustrated separately) in which the second magnetic element 62 is not disposed or expanded. The film 82 may overlap the arrangement area when viewed from above the second cover 122. The film 82 may not be expanded to the non-arrangement area when viewed from above the second cover 122 (see the B-B' cross-sectional view in FIG. 9).

According to the embodiment, when viewed from above the second cover 122, one surface of the conductive sheet 81, which is directed toward the second cover 122, may include an arrangement area (not illustrated separately) in which the film 82 is disposed, and a non-arrangement area (not illustrated separately) in which the film 82 is not disposed or expanded. When viewed from above the second cover 122, a part of the third adhesive part 93, which corresponds to the non-arrangement area, may be disposed to be closer to the second bezel B2 or the second portion 422 of the extension part 42 than another part of the third adhesive part 93, which corresponds to the arrangement area, to the second bezel B2 or the second portion 422 of the extension part 42.

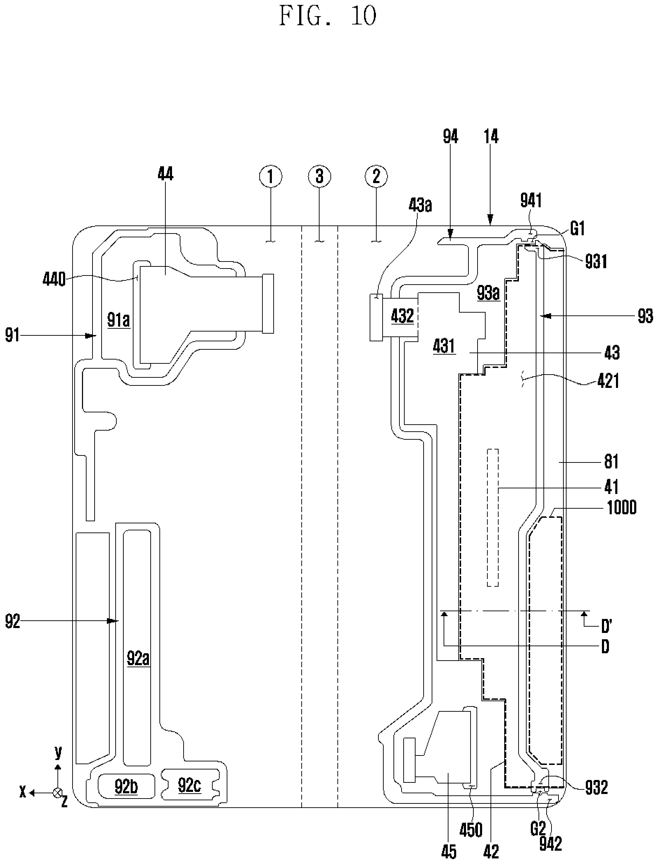

FIG. 10 is a view illustrating the first display module 14, the first adhesive part (or the first bonding part) 91, the second adhesive part (or the second bonding part) 92, the third adhesive part (or the third bonding part) 93, and the fourth adhesive part (or the fourth bonding part) 94 according to an embodiment of the disclosure, which may be combined with any of the preceding embodiments.

With reference to FIG. 10, the first display module 14 may include the first display area ①, the second display area ①, the third display area ③, the display drive circuit 41, the extension part 42, the fifth flexible printed circuit board 43, the sixth flexible printed circuit board 44, the seventh flexible printed circuit board 45, the conductive sheet 81, and/or a reinforcement layer 1000.

According to the embodiment, the first display module 14 may include the reinforcement layer 1000 that is substituted for the film 82 included in the first display module 14 according to the embodiment in FIG. 8. The reinforcement layer 1000 may be positioned between the conductive sheet 81 and the second display area ②. During a process of assembling the constituent elements of the foldable electronic device 1 (see FIG. 2), external metal foreign substances are sometimes positioned inadvertently between the second magnetic element 62 and the reinforcement layer 1000 because of a magnetic force of the second magnetic element 62. The reinforcement layer 1000 according to the embodiment may reduce or prevent damage to the first portion 421 of the extension part 42 caused by pressed external metal foreign substances. The reinforcement layer 1000 according to the embodiment may reduce or prevent damage to the second display area 02 caused by pressed external metal foreign substances.

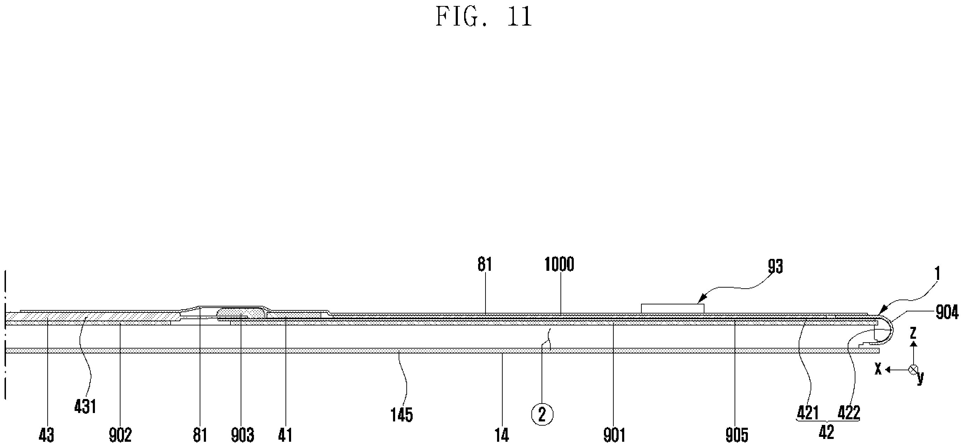

FIG. 11 is a cross-sectional view taken along line D-D' in FIG. 10 and illustrating the first display module 14 and the third adhesive part 93 according to an embodiment of the disclosure, which may be combined with any of the preceding embodiments.

Some of the constituent elements illustrated in FIG. 11 may be substantially identical to the constituent elements illustrated in FIG. 8, and a description thereof will be omitted.

With reference to FIG. 11, in the embodiment, the first display module 14 may include the reinforcement layer 1000 that is substituted for the film 82 included in the first display module 14 according to the embodiment in FIG. 8.

According to the embodiment, the reinforcement layer 1000 may be at least partially disposed between the first portion 421 of the extension part 42 and the conductive sheet 81.

According to the embodiment, the reinforcement layer 1000 may include a non-electrically conductive material (e.g., polymer). The reinforcement layer 1000 may include PET, but the disclosure is not limited thereto.

According to various embodiments, the reinforcement layer 1000 may include the same material as the cover layer 904.

According to various embodiments, the reinforcement layer 1000 may include a material different from the material of the cover layer 904.

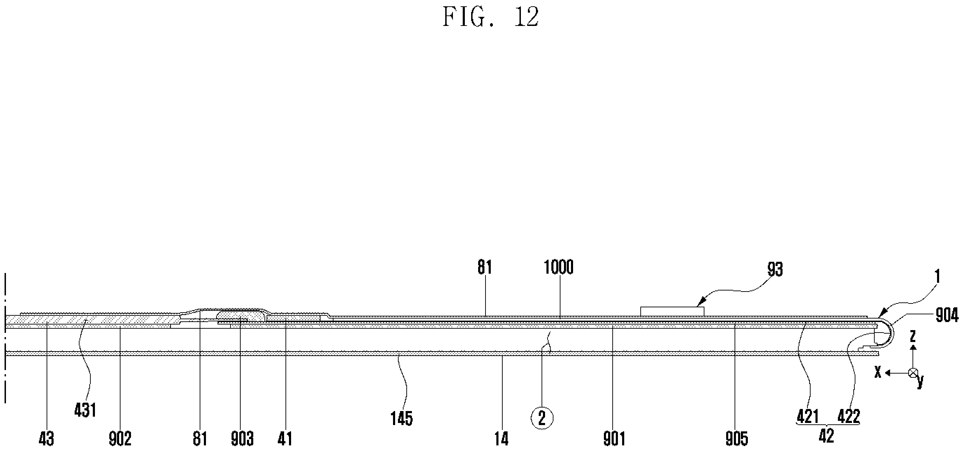

FIG. 12 is a cross-sectional view taken along line D-D' in FIG. 10 and illustrating the first display module 14 and the third adhesive part 93 according to an embodiment of the disclosure, which may be combined with any of the preceding embodiments.

Some of the constituent elements illustrated in FIG. 12 may be substantially identical to the constituent elements illustrated in FIG. 8, and a description thereof will be omitted.

According to the embodiment, the reinforcement layer 1000 may be a part of the cover layer 904 and at least partially disposed between the first portion 421 of the extension part 42 and the conductive sheet 81.

According to the exemplary embodiment of the disclosure, the foldable electronic device 1 includes the foldable housing 10, the display module (e.g., the first display module 14), the display drive circuit 41, the conductive sheet 81, the adhesive part (e.g., the third adhesive part 93), the magnetic element (e.g., the second magnetic element 62), and the film 82. The display module is disposed in the foldable housing. The display module includes the flexible display 140 including the plurality of pixels. The display module includes the extension part 42 extending from the flexible display 140. The extension part 42 includes the first portion 421 positioned between the flexible display 140 and the foldable housing 10. The extension part 42 includes the second portion 422 extending while being bent toward the first portion 421 from the flexible display 140. The display drive circuit 41 is disposed on the first portion 421. The conductive sheet 81 is disposed between the first portion 421 and the foldable housing 10 and coupled to the first portion 421. The adhesive part is disposed between the conductive sheet 81 and the foldable housing 10. The magnetic element is disposed between the first portion 421 and the foldable housing 10. The magnetic element is positioned between the adhesive part and the second portion when viewed from above the first portion 421. The film 82 is disposed between the conductive sheet 81 and the foldable housing 10 and disposed on the conductive sheet 81 while corresponding to the magnetic element. The magnetic element is disposed between the film 82 and the foldable housing 10.

According to the exemplary embodiment of the disclosure, the extension part 42 may include a part of the TFT film 141b included in the flexible display 140.

According to the exemplary embodiment of the disclosure, the extension part 42 may include the flexible film substrate electrically connected to the flexible display 140.

According to the exemplary embodiment of the disclosure, when viewed from above the first portion 421, a part of the adhesive part (e.g., the third adhesive part 93), which corresponds to the film 82, may be farther from the second portion 422 than another part of the adhesive part from the second portion 422.

According to the exemplary embodiment of the disclosure, the foldable electronic device 1 may further include the flexible printed circuit board (e.g., the fifth printed circuit board 43) electrically connected to the first portion 421 of the extension part 42.

According to the exemplary embodiment of the disclosure, the conductive sheet 81 may be electrically connected to the ground area included in the flexible printed circuit board (e.g., the fifth flexible printed circuit board 43).

According to the exemplary embodiment of the disclosure, the foldable electronic device 1 may further include the spacer 905 disposed between the flexible display 140 and the first portion 421.

According to the exemplary embodiment of the disclosure, the foldable electronic device 1 may further include the cover layer 904 disposed on the second portion 422. A part of the cover layer 904 may be disposed between the conductive sheet 81 and the first portion 421.

According to the exemplary embodiment of the disclosure, the film 82 may include PET.

According to the exemplary embodiment of the disclosure, the foldable electronic device 1 may further include the other magnetic element (e.g., the first magnetic element 61) disposed in the foldable housing 10. The foldable housing 10 may include the hinge part H configured to connect the first housing 11, the second housing 12, the first housing 11, and the second housing 12. The magnetic element (e.g., the second magnetic element 62) may be disposed in the second housing 12. The other magnetic element (e.g., the first magnetic element 61) may be disposed in the first housing 11. In the folded state of the foldable housing 10, the magnetic element (e.g., the second magnetic element 62) and the other magnetic element (e.g., the first magnetic element 61) may be aligned.

According to the exemplary embodiment of the disclosure, the foldable electronic device 1 may include the foldable housing 10, the display module (e.g., the first display module 14), the display drive circuit 41, the conductive sheet 81, the adhesive part (e.g., the third adhesive part 93), the magnetic element (e.g., the second magnetic element 62), and the reinforcement layer 1000. The display module 14 may be disposed in the foldable housing 10. The display module may include the flexible display 140 including the plurality of pixels. The display module may include the extension part 42 extending from the flexible display 140. The extension part 42 may include the first portion 421 positioned between the flexible display 140 and the foldable housing 10. The extension part 42 may include the second portion 422 extending while being bent toward the first portion 421 from the flexible display 140. The display drive circuit 41 may be disposed on the first portion 421. The conductive sheet 81 may be disposed between the first portion 421 and the foldable housing 10 and coupled to the first portion. The adhesive part may be disposed between the conductive sheet 81 and the foldable housing 10. The magnetic element may be disposed between the first portion 421 and the foldable housing 10. The magnetic element may be positioned between the adhesive part 93 and the second portion 422 when viewed from above the first portion 421. The reinforcement layer 1000 may be disposed between the first portion 421 and the conductive sheet 81 while corresponding to the magnetic element 62. The magnetic element may be positioned between the reinforcement layer 1000 and the foldable housing 10.

According to the exemplary embodiment of the disclosure, the reinforcement layer 1000 may be a part of the cover layer 904 at least partially disposed in the second portion 422.

According to the exemplary embodiment of the disclosure, the extension part 42 may include a part of the TFT film included in the flexible display 140.

According to the exemplary embodiment of the disclosure, the extension part 42 may include the flexible film substrate electrically connected to the flexible display 140.

According to the exemplary embodiment of the disclosure, a part of the adhesive part 93, which corresponds to the reinforcement layer 1000, may be farther from the second portion 422 than another part of the adhesive part 93 from the second portion 422 when viewed from above the first portion 421.

According to the exemplary embodiment of the disclosure, the foldable electronic device 1 may further include the flexible printed circuit board 43 electrically connected to the first portion 421 of the extension part 42.

According to the exemplary embodiment of the disclosure, the conductive sheet 81 may be electrically connected to the ground area included in the flexible printed circuit board 43.

According to the exemplary embodiment of the disclosure, the foldable electronic device 1 may further include the spacer 905 disposed between the flexible display 140 and the first portion 421.

According to the exemplary embodiment of the disclosure, the reinforcement layer 1000 may include PET.

According to the exemplary embodiment of the disclosure, the foldable electronic device 1 may further include the other magnetic element (e.g., the first magnetic element 61) disposed in the foldable housing 10. The foldable housing 10 may include the hinge part H configured to connect the first housing 11, the second housing 12, the first housing 11, and the second housing 12. The magnetic element (e.g., the second magnetic element 62) may be disposed in the second housing 12. The other magnetic element (e.g., the first magnetic element 61) may be disposed in the first housing 11. The magnetic element and the other magnetic element may be aligned in the folded state of the foldable housing 10.

The embodiments of the disclosure disclosed in the disclosure and illustrated in the drawings are provided as particular examples for easily explaining the technical contents according to the disclosure and helping understand the disclosure, but not intended to limit the scope of the disclosure. Such embodiments of the disclosure may be combined with one another. Accordingly, the scope of the various embodiments of the disclosure should be interpreted as including alterations or modifications in addition to the disclosed embodiments. Additionally, it will be understood that any embodiment(s) described herein may be used in conjunction with any other embodiment(s) described herein.

## Claims

1. A foldable electronic device 1 comprising:
a foldable housing (10);
a display module (14) disposed in the foldable housing (10), the display module (14) comprising a flexible display (140) including a plurality of pixels, and an extension part (42) including a first portion (421) positioned between the flexible display (140) and the foldable housing (10), and a second portion (422) extending while being bent toward the first portion (421) from the flexible display (140);
a display drive circuit (41) disposed on the first portion (421);
a conductive sheet (81) disposed between the first portion (421) and the foldable housing (10) and coupled to the first portion (421);
an adhesive part (93) disposed between the conductive sheet (81) and the foldable housing (10);
a magnetic element (62) disposed between the first portion (421) and the foldable housing (10), and positioned between the adhesive part (93) and the second portion (422) when viewed from above the first portion (421); and
a film (82) disposed between the conductive sheet (81) and the foldable housing (10) and disposed on the conductive sheet (81) while corresponding to the magnetic element (62),
wherein the magnetic element (62) is positioned between the film (82) and the foldable housing (10).

2. The foldable electronic device of claim 1, wherein the extension part (42) comprises a part of a thin-film transistor, TFT, film included in the flexible display (140).

3. The foldable electronic device of claim 1, wherein the extension part (42) comprises a flexible film substrate electrically connected to the flexible display (140).

4. The foldable electronic device of any one of claims 1 to 3, wherein a part of the adhesive part (93), which corresponds to the film (82), is farther from the second portion (422) than another part of the adhesive part (93) from the second portion (422) when viewed from above the first portion (421).

5. The foldable electronic device of any one of claims 1 to 4, further comprising:
a flexible printed circuit board (43) electrically connected to the first portion (421) of the extension part (42).

6. The foldable electronic device of claim 5, wherein the conductive sheet (81) is electrically connected to a ground area included in the flexible printed circuit board (43).

7. The foldable electronic device of any one of claims 1 to 6, further comprising:
a spacer disposed between the flexible display (140) and the first portion (421).

8. The foldable electronic device of any one of claims 1 to 7, further comprising:
a cover layer (904) disposed on the second portion (422),
wherein a part of the cover layer (904) is disposed between the conductive sheet (81) and the first portion (421).

9. The foldable electronic device of any one of claims 1 to 8, wherein the film (82) includes polyethylene terephthalate, PET.

10. The foldable electronic device of any one of claims 1 to 9, further comprising:
the other magnetic element (61) disposed in the foldable housing (10),
wherein the foldable housing (10) comprises:
a first housing (11);
a second housing (12); and
a hinge part (H) configured to connect the first housing (11) and the second housing (12),
wherein the magnetic element (62) is disposed in the second housing (12),
wherein the other magnetic element (61) is disposed in the first housing (11), and
wherein the magnetic element (62) and the other magnetic element (61) are aligned in a folded state of the foldable housing (10).
